# EUROPEAN PATENT SPECIFICATION

(11) **EP 4 059 721 B1**
(45) Date of publication and mention of the grant of the patent: **05.06.2024**
(21) Application number: 21751303.5
(22) Date of filing: 14.01.2021
(51) Int. Cl.: B41J 2/01, B41J 2/21, C09D 11/322, C09D 11/38, C09D 11/54, B41M 5/00, B41M 7/00, C09D 11/10, C09D 11/102, C09D 11/104, C09D 11/107

(54) **INKJET-RECORDING METHOD AND IMAGE-RECORDED ARTICLE**
TINTENSTRAHLAUFZEICHNUNGSVERFAHREN UND BILDAUFZEICHNUNGSGEGENSTAND
PROCÉDÉ D'IMPRESSION À JET D'ENCRE ET ARTICLE IMPRIMÉ PAR IMAGE

(30) Priority: 04.02.2020 JP 2020016724
(43) Date of publication of application: 21.09.2022
(73) Proprietor: KONICA MINOLTA, INC., Tokyo 100-7015 (JP)
(72) Inventor: NIIZUMA, Naoto, Tokyo 100-7015 (JP); TAGORI, Hirotaka, Tokyo 100-7015 (JP)
(74) Representative: Gille Hrabal Partnerschaftsgesellschaft mbB Patentanwälte
(86) International application number: PCT/JP2021/000986
(87) International publication number: WO 2021/157310

(56) References cited:
- EP-A1- 3 587 515
- WO-A1-2019/163581
- JP-A- 2015 034 277
- JP-A- 2017 137 461
- JP-A- 2019 019 315
- JP-A- 2019 167 486
- US-A1- 2019 031 897

## Description

### Technical Field

The present invention relates to an inkjet recording method and an image recorded article. More specifically, the present invention relates to an inkjet recording method with improved hot water resistance in a two-component inkjet recording method that forms an image on a pre-coat coating film, and to an image recorded article using this method.

### Background Technology

In an inkjet system for high-speed printing, a two-component inkjet recording method is known in which an image is formed on a pre-coat coating film containing a pigment aggregating agent (see, for example, Patent Document 1). Since a pigment dispersion is anionic, the pigment aggregating agent is generally selected from a cation resin, an organic acid, or a polyvalent metal salt.

On the other hand, an image recorded article may require hot water resistance. For example, in the flexible packaging field, the boil-retort field is one that requires a process to sterilize packaging at high temperatures, which requires products with a higher level of hot water resistance. Specifically, boil-retort suitability is required with high ink fixation and excellent fixation to the recording medium even in a high temperature water environment.

For example, improvement of lamination strength and image abrasion resistance has been proposed by selecting a nonionic resin as the resin species of the pre-coat liquid (see, for example, Patent Document 2). However, the hot water resistance was still insufficient.

### Prior art Documents

### Patent Documents

Patent Document 1: JP-A 2009-202596
Patent Document 2: JP-A 2018-94902

The document EP 3 587 515 A1 discloses a multilayered image recorded article with a corresponding inkjet recording method.

### Summary of the Invention

### Problem to be solved by the Invention

The present invention was made in view of the above problems and circumstances, and its solution is to provide an inkjet recording method with improved hot water resistance in a two-component inkjet recording method for image formation on a pre-coat coating film, and an image recorded article using this method.

### Means to solve the Problems

In the process of studying the causes of the above problems to solve the above-described problems, the present inventor found the following. By selecting an organic amine as a neutralizing agent for a pigment dispersant, and by using amine desorption by heating, the hot water resistance of the pigment dispersant is improved. Further, by heat-decomposing the pigment aggregating agent during drying, which is also a cause of deterioration of hot water resistance, the hot water resistance of an image recorded article is improved.

That is, the above issues related to the present invention are solved by the following means.

1. An inkjet recording method comprising the sequential steps of:
   applying an aqueous pre-coat composition to a substrate, or applying and drying the aqueous pre-coat composition to the substrate; and
   subsequently applying and drying an aqueous ink composition,
   wherein the aqueous pre-coat composition contains at least an aggregating agent; the aqueous ink composition contains at least a pigment, a polymer dispersant, and resin fine particles; the aggregating agent is selected from a pyrolytic cation resin, an organic acid, or a multivalent metal salt; a neutralizer for the polymer dispersant is selected from an organic amine; and
   in the step of drying the aqueous ink composition, a temperature at which the aqueous ink composition is dried is set to be equal to or higher than a pyrolytic temperature of the aggregating agent.
2. The inkjet recording method according to item 1, wherein the step of applying the aqueous pre-coat composition is a step of using an inkjet method.
3. The inkjet recording method according to item 1 or 2, wherein a content of the aggregating agent is 5 mass% or less with respect to the aqueous pre-coat composition.
4. The inkjet recording method according to any one of items 1 to 3, wherein a temperature at which the aqueous ink composition is dried is 220 °C or lower.
5. The inkjet recording method according to any one of items 1 to 4, wherein a resin of the resin fine particles of the aqueous ink composition is selected from a polyurethane resin, a polyacrylic resin, or a composite resin of a polyurethane resin and a polyacrylic resin.
6. The inkjet recording method according to any one of items 1 to 5, wherein the aqueous pre-coat composition further contains resin fine particles, and a resin of the resin fine particles is selected from a polyester resin, a polyurethane resin, a polyacrylic resin, or a composite resin of a polyurethane resin and a polyacrylic resin.
7. An image recorded article comprising a metal substrate having thereon at least four laminated layers,
   wherein a first layer and a fourth layer each contain a thermoplastic resin;
   a second layer contains at least an aggregating agent, the aggregating agent being selected from a pyrolytic cation resin, an organic acid, or a multivalent metal salt; and
   a third layer contains at least a pigment, a polymer dispersant, and resin fine particles, and
   the third layer is dried at a temperature equal to or higher than a pyrolytic temperature of the aggregating agent.
8. The image recorded article according to item 7, wherein a content of the aggregating agent is 5 mass% or less with respect to the second layer.
9. The image recorded article according to item 7 or 8, wherein a resin of the resin fine particles contained in the third layer is selected from a polyurethane resin, a polyacrylic resin, or a composite resin of a polyurethane resin and a polyacrylic resin.
10. The image recorded article according to any one of items 7 to 9, wherein the second layer further contains resin fine particles, and a resin of the resin fine particles is selected from a polyurethane resin, a polyacrylic resin, or a composite resin of a polyurethane resin and a polyacrylic resin.

### Effects of the Invention

According to the above means of the present invention, in a two-component inkjet recording method for forming an image on a pre-coat coating film, it is possible to provide an inkjet recording method having improved hot water resistance and an image recorded article using the same method.

The expression mechanism or action mechanism of the effect of the invention is inferred as follows.

The inkjet recording method of the present invention comprises the steps of: applying an aqueous pre-coat composition on a substrate, or applying and drying the aqueous pre-coat composition on the substrate followed by applying and drying an aqueous ink composition, in that order, wherein the aqueous pre-coat composition contains at least an aggregating agent and the aqueous ink composition contains at least a pigment, a polymer dispersant, and resin fine particles. The aggregating agent is selected from a pyrolytic cation resin, an organic acid, or a polyvalent metal salt, and a neutralizing agent of the polymer dispersant is selected from an organic amine, and a temperature at which the aqueous ink composition is dried is set to be equal to or higher than the pyrolytic temperature of the aggregating agent.

In the present invention, it is inferred as follows. By selecting an organic amine as a neutralizing agent for the pigment dispersant and utilizing amine desorption by heating, the hot water resistance of the pigment dispersant is improved and the hot water resistance of the image recorded article is improved by heating and decomposing the pigment aggregating agent during drying, which is the cause of degradation of hot water resistance.

### Brief Description of the Drawings

FIG. 1 is a schematic diagram showing an example of a pre-coat/inkjet recording device preferred for the present invention.
FIG. 2 is a cross-sectional view of a schematic structure of an image recorded article of the present invention.
FIG. 3 is a cross-sectional view of a packaging material for a canned food product.

### Embodiments to carry out the Invention

The inkjet recording method of the present invention is an inkjet recording method comprising the steps of applying an aqueous pre-coat composition on a substrate, or applying and drying the aqueous pre-coat composition on the substrate, followed by applying and drying an aqueous ink composition, in that order, wherein the aqueous pre-coat composition contains at least an aggregating agent, and the aqueous ink composition contains at least a pigment, a polymer dispersant and resin particles, the aggregating agent is selected from a pyrolytic cation resin, an organic acid or a polyvalent metal salt, a neutralizing agent of the polymer dispersant is selected from an organic amine. The step of drying the aqueous ink composition is characterized in that a temperature at which the aqueous ink composition is dried is set to be equal to or higher than the pyrolytic temperature of the aggregating agent. This feature is a technical feature common to or corresponding to the following embodiments.

As an embodiment of the present invention, from the viewpoint of expressing the effects of the present invention, it is preferable that the step of applying the aqueous pre-coat composition is a step using an inkjet method, since it eliminates the need to apply an aggregating agent to ink-uncoated areas, thereby improving the overall hot water resistance.

It is preferred that the content of the aggregating agent is 5 mass% or less with respect to the aqueous pre-coat composition from the viewpoint of balancing image quality and hot water resistance. The content of the aggregating agent is preferably in the range of 0.1 to 3 mass%.

The temperature at which the aqueous ink is dried is 220 °C or lower, which is the preferred temperature range from the viewpoint of suppressing thermal decomposition, because when the ink drying temperature is too high, thermal decomposition of the resin in the ink will begin and hot water resistance will deteriorate.

It is preferred that the resin of the resin fine particles of the aqueous ink composition is selected from a polyurethane resin, a polyacrylic resin, or a composite resin of a polyurethane resin and a polyacrylic resin, from the viewpoint of improving the hot water resistance of the ink image to the substrate.

It is preferable that the aqueous pre-coat composition further contains resin fine particles, and that the resin of the resin fine particles is selected from a polyester resin, a polyurethane resin, a polyacrylic resin, or a composite resin of a polyurethane resin and a polyacrylic resin from the viewpoint of improving hot water resistance. The choice of resin particles is also affected by the acid number of the resin, with lower acid numbers being better, but a polyurethane resin or a polyacrylic resin are preferred for their higher hot water resistance compared to a polyester resin, which are prone to hydrolysis of the resin itself.

The image recorded article of the present invention is an image recorded article having at least four layers laminated on a metal substrate, wherein the first layer and the fourth layer contain a thermosetting resin, the second layer contains at least an aggregating agent, provided that the aggregating agent is selected from a pyrolytic cation resin, an organic acid, or a polyvalent metal salt. The third layer contains at least a pigment, a polymer dispersant and resin fine particles, and a neutralizing agent for the polymer dispersant is selected from an organic amine, and the third layer is dried at a temperature equal to or higher than pyrolytic temperature of the aggregating agent.

Hereinafter, the present invention, its constituent elements, and modes and embodiments for carrying out the present invention will be described in detail. In addition, in this application, "to" is used in the meaning which includes the numerical values described before and after "to" as the lower limit value and the upper limit value.

### «Outline of the inkjet recording method of the present invention»

The inkjet recording method (hereinafter, it is also referred to as the inkjet method) of the present invention comprises the following sequential steps of: applying an aqueous pre-coat composition on a substrate, or applying and drying the aqueous pre-coat composition on the substrate; and applying and drying an aqueous ink composition, provided that the aqueous pre-coat composition contains at least an aggregating agent, and the aqueous ink composition contains at least a pigment, a polymer dispersant, and resin fine particles. The aggregating agent is selected from a pyrolytic cation resin, an organic acid, or a polyvalent metal salt, and a neutralizing agent for the polymer dispersant is selected from an organic amine, and a temperature at which the aqueous ink composition is dried is set to be equal to or higher than the pyrolytic temperature of the aggregating agent.

The inkjet recording method of the present invention may apply the aqueous ink composition continuously without drying after applying the aqueous pre-coat composition, in that case the aqueous pre-coat composition is dried together with the aqueous ink composition.

Although the inkjet recording method of the present invention is not particularly limited in its application, by forming a pre-coat layer on a non-absorbent substrate using the aqueous pre-coat composition of the present invention, and recording an ink image thereon using the aqueous ink composition, a high quality image is recorded on the non-absorbent substrate. In particular, it may provide an image recorded article suitable for packaging materials for canned foods and retort pouch foods due to its excellent hot water resistance.

The term "aqueous pre-coat compositions and aqueous ink compositions" as used in this invention means "pre-coat compositions and ink compositions" that use at least "water" as a solvent. In both cases, 60 mass% or more of the solvent used is "water.

"Pyrolysis" refers to a chemical decomposition of an organic compound or other substance by heating it in the absence of oxygen or halogens.

The "pyrolytic temperature of the aggregating agent" according to the present invention may be measured with a thermogravimetric differential thermal analyzer (TG-DTA), and the "pyrolytic temperature" means the temperature at which mass loss due to thermal decomposition begins when the temperature is increased from room temperature (temperature increase speed: 10 °C/min). Here, the temperature at which mass loss begins is the temperature at which the tangent line at the time of the greatest mass loss and the tangent line before the mass loss intersect in a graph plotting the mass loss rate on the vertical axis and the temperature on the horizontal axis. Specifically, using a device STA7200 manufactured by Hitachi High-Tech Science Corporation, the decomposition temperature of each aggregating agent is measured according to the above definition.

### [1] Substrate

Substrates that may be used in the present invention are not limited, but it is preferred that they are non-absorbent substrates. In the present invention, non-absorbent means non-absorbent to water.

Examples of the non-absorbent substrate include films of known plastics. Specific examples include polyester film such as polyethylene terephthalate, polyethylene film, polypropylene film, polyamide film such as nylon, polystyrene film, polyvinyl chloride film, polycarbonate film, polyacrylonitrile film, biodegradable films such as polylactic acid film. In addition, polyvinylidene chloride coated on one or both sides of the film or metal oxide vapor-deposited film may be preferably used to provide gas barrier, moisture-proofing, and aroma retention properties. Non-absorbent films may preferably be used either as unstretched or stretched films. The thickness of the substrate of plastic film is preferably in the range of 10 to 120 µm, and more preferably in the range of 12 to 60 µm.

In addition, as non-absorbent substrates, metal substrates such as a tin plate and a tin free steel plate (TFS plates, 0. 1 to 0.6 µm thick) for 3-piece can applications are also preferably used. For example, it may be suitably used as a packaging material for canned foods provided with a thermosetting resin as a coating layer.
The packaging material for canned foods, for example, blocks air, moisture, and light, and seals the food inside.
For that purpose, epoxy-phenolic paints and polyester laminating agents are generally used on the food side, and polyester and acrylic thermosetting paints are generally used on the outside.

### [2] Aqueous pre-coat composition

The aqueous pre-coat composition (hereinafter also referred to as a "pre-coat liquid") of the present invention) may speed up the image formation of an ink, improve the physical properties of the pre-coat layer and the ink layer, and provide functions to enhance image quality when recording images by an inkjet printing method on a substrate. Specifically, in the present invention, the pre-coat layer according to the present invention is applied and dried in advance on the surface to be printed with an inkjet method, and then the aqueous ink composition according to the present invention (hereinafter also referred to as an "inkjet ink," "ink liquid," or simply "ink") is applied to the substrate. By printing the inkjet ink, even if the substrate is non-absorbent, it is possible to record with excellent image quality, water resistance, hot water resistance, and adhesion between the non-absorbent substrate and the pre-coat layer.

The aqueous pre-coat composition according to the present invention is characterized in that it contains at least an aggregating agent and water as a solvent. Furthermore, it is preferable to contain resin fine particles from the viewpoint of hot water resistance.

### (Aggregating agent)

The pre-coat liquid according to the present invention contains a material that produces an aggregate when in contact with inkjet ink containing a pigment. That is, it contains an aggregating agent, thereby increasing the interaction with the inkjet ink and further fixing the dots in the aqueous ink composition.

The aggregating agent preferably contains any one of a pyrolytic cation resin, an organic acid, or a polyvalent metal salt, more preferably contains an organic acid or a polyvalent metal salt.

The "pyrolytic temperature of aggregating agent" may be measured using a thermogravimetric differential thermal analyzer (TG-DTA), as described above, and the "pyrolytic temperature" means a temperature at which mass loss due to thermal decomposition begins when the temperature is increased from room temperature (temperature increase speed: 10 °C/min). Here, the temperature at which mass loss begins is the temperature at which the tangent line at the time of the greatest mass loss and the tangent line before the mass loss intersect in a graph plotting the mass loss rate on the vertical axis and the temperature on the horizontal axis. Specifically, using a device STA7200 manufactured by Hitachi High-Tech Science Corporation, the decomposition temperature of each aggregating agent is measured according to the above definition.

The above cation resin and polyvalent metal salt may aggregate anionic components (usually colorants or pigments) in the above inkjet inks by salting out. The above organic acid may aggregate the anionic components in the above inkjet inks by pH fluctuation.

Examples of the above cation resin include polyarylamine, polyvinylamine, polyethyleneimine and polydiallyldimethylammonium chloride. Examples of commercially available cation resins include KHE100L and FPA100L (manufactured by Senka Corporation), PAS-92A, PAS-M-1A, and PAS-21CL ((manufactured by Nittobo Medical, Inc.).

The above organic acid is capable of aggregate the pigment contained in the inkjet ink. The first dissociation constant is preferably less than 3.5, and it is preferably in the range of 1.5 and 3.5. In this range, liquid deviation in low-density areas with low print rates is further prevented and beading in high-density areas with high print rates is further improved.

It is preferable to use an organic acid that has not been completely neutralized by a base. Neutralization by a base means to form ionic bonding between the acidic groups of the acid and other positively charged elements or compounds (e.g., inorganic compounds such as metals). Not completely neutralized means that among the acidic groups of the organic acid, there are acidic groups that do not form the above ionic bond. By using an organic acid having acidic groups that do not form ionic bonds, it is possible to form a transparent pre-coat layer with high compatibility with the composite resin fine particles having a polyurethane structure contained in the pre-coat liquid, and the color tone of the formed image is more vivid than when using a polyvalent metal salt. In addition, the use of organic acid makes it easier to maintain the storage stability of the pre-coat liquid and prevents blocking after the pre-coat liquid is applied and dried. Preferred organic acids from the above viewpoint are formic acid, acetic acid, propionic acid, isobutyric acid, oxalic acid, fumaric acid, malic acid, citric acid, malonic acid, succinic acid, maleic acid, benzoic acid, 2-pyrrolidone 5-carboxylic acid, lactic acid, acrylic acid and its derivatives, methacrylic acid and its derivatives, or compounds with a carboxy group including acrylamide and its derivatives, sulfonic acid derivatives, and phosphoric acid and its derivatives.

The content of the organic acid in the pre-coat liquid may be an amount that adjusts the pH of the pre-coat liquid to be less than the first dissociation constant of the organic acid. By including an amount of organic acid in the pre-coat liquid that causes the pH of the pre-coat liquid to be less than the first dissociation constant of the organic acid, bleeding during high-speed printing may be effectively suppressed.

Examples of the above multivalent metal salt include water-soluble salts such as calcium salt, magnesium salt, aluminum salt and zinc salt.

The aggregating agent is preferably contained in the range of 5 mass% or less of the aforementioned pre-coat liquid, and it is preferable to be contained in the range of 0.1 to 3 mass% from the viewpoint of effectively aggregating the anionic components in the inkjet ink, and balancing image quality and hot water resistance.

The content of the aggregating agent in aqueous solution may be measured by known methods. For example, when the aggregating agent is a polyvalent metal salt, it may be measured by ICP emission spectrometry; when the aggregating agent is an acid, it may be measured by high-performance liquid chromatography (HPLC).

When an organic acid is used, the amount of organic acid added is preferably an amount that adjusts the pH of the pre-coat liquid to be equal to or less than the neutralizing equivalent of the anionic component in the inkjet ink. When the above anionic component is a compound having a carboxy group, the first dissociation constant of the above organic acid is preferably 3.5 or less from the viewpoint of less bleeding of images.

The applied amount of pre-coat liquid of the present invention is not limited, and may be adjusted appropriately. For example, when the above aggregating agent is a polyvalent metal salt, the amount of polyvalent metal salt attached is preferably in the range of 0.1 to 20 g/m². When the above aggregating agent is an organic acid, the amount of organic acid added is preferably equal to or less than the neutralizing equivalent of the anionic component in the aqueous ink composition.

### (Resin fine particles)

It is preferred that the aqueous pre-coat composition according to the present invention further contain resin fine particles. The resin fine particles are preferably water insoluble resin fine particles. The water insoluble resin fine particles used in the present invention are water insoluble resin fine particles that may receive ink and show solubility or affinity for the ink.

Water insoluble resin fine particles are essentially water insoluble, but have a form in which the resin is dispersed in an aqueous medium as microscopic particles, and they are either a water insoluble resin dispersed in water by forced emulsification using an emulsifier, or they are a self-emulsifying water insoluble resin that introduces a hydrophilic functional group into the molecule and forms a stable aqueous dispersion by itself without using an emulsifier or a dispersion stabilizer. These resins are usually used as an emulsified dispersion in water or water-alcohol mixed solvents.

In the present invention, "water insoluble" means that when the resin is dried at 105 °C for 2 hours, and then dissolves in 100 g of water at 25 °C, it refers to a resin which dissolves 10 g or less, preferably 5 g or less, and further preferably 1 g or less. However, when the resin has a salt-forming group, the dissolved amount is the dissolved amount when the salt-forming group of the resin is 100 % neutralized with acetic acid or sodium hydroxide, depending on the type.

The resin fine particles used in the aqueous pre-coat composition are preferably cationic or nonionic in the ionic nature.

The water insoluble resin fine particles according to the present invention are preferably particles of at least a polyester resin, a polyurethane resin, a polyacrylic resin, or a composite resin of a polyurethane resin a polyacrylic resin. It is especially preferred that the resin fine particles are particles of a polyurethane resin, a polyacrylic resin, or a composite resin of a polyurethane resin and a polyacrylic resin.

The water insoluble resin fine particles is preferably contained in the range of 1 to 30 mass% of the total mass (100 mass%) of the pre-coat liquid. It is more preferable to be contained in the range of 2 to 20 mass% from the viewpoint of storage stability of the pre-coat liquid and suppressing blooming (a phenomenon in which a resin and an aggregating agent precipitate and crystallize on the image surface).

### (Polyester resin)

Polyester resins with a polyester backbone as water insoluble resin fine particles may be obtained using polyhydric alcohol components and polyvalent carboxylic acid components such as polyvalent carboxylic acid, polyvalent carboxylic anhydride, and polyvalent carboxylic acid ester.

Examples of the polyhydric alcohol component include divalent alcohols (diols). Specific examples include alkylene glycols having 2 to 36 carbon atoms (ethylene glycol, 1,2-propylene glycol, 1,3-propylene glycol, 1,4 butylene glycol, and 1,6-hexanediol), alkylene ether glycols having 4 to 36 carbon atoms (diethylene glycol, triethylene glycol, dipropylene glycol, polyethylene glycol, polypropylene glycol, and polybutylene glycol), alicyclic diols having 6 to 36 carbon atoms (1,4-cyclohexanedimethanol and hydrogenated bisphenol A), alkylene oxides adducts having 2 to 4 carbon atoms of the alicyclic diols (ethylene oxide (hereinafter referred to as EO), propylene oxide (hereinafter abbreviated as PO), butylene oxide (hereinafter abbreviated as BO) adducts having addition mole number of 1 to 30), alkylene oxide adducts having 2 to 4 carbon atoms (EO, PO, BO) of bisphenols (bisphenol A, bisphenol F, bisphenol S) (having addition mole number of 1 to 30). These may be used alone or in combination of two or more.

Examples of the polyvalent carboxylic acid component include a divalent carboxylic acid (dicarboxylic acid), specifically alkanedicarboxylic acids having 4 to 36 carbon atoms (succinic acid, adipic acid, sebacic acid), alkenyl succinic acids (dodecenyl succinic acid), alicyclic dicarboxylic acids having 4 to 36 carbon atoms (dimeric acid (dimerized linoleic acid), alkenedicarboxylic acids having 4 to 36 carbon atoms (maleic acid, fumaric acid, citraconic acid, mesaconic acid), and aromatic dicarboxylic acids having 8 to 36 carbon atoms (phthalic acid, isophthalic acid, terephthalic acid or their derivatives, naphthalene dicarboxylic acid). These may be used alone or in combination of two or more.

The number average molecular weight (Mn) of the aforementioned polyester resins is preferably in the range of 1,000 to 50,000, and more preferably in the range of 2,000 to 20,000.

Commercially available products may be used as the aforementioned polyester resins. Examples thereof include Pesresin A-110F, A-640, A-647GEX manufactured by Takamatsu Oil & Fat Co., Ltd., Vylonal MD-1100, MD-1200, MD-1335, MD-1480, MD-1930, MD-2000 manufactured by Toyobo Co., Ltd., Z-1100 manufactured by Goo Chemical Co., Ltd. These may be used alone or in combination of two or more.

### (Polyurethane resin)

As a polyurethane resin for the water insoluble resin fine particles, those having a hydrophilic group may be used.

The above polyurethane resins are preferably water dispersions of self-emulsifying polyurethanes having water soluble functional groups in their molecules, or of forced-emulsifying polyurethanes emulsified under strong mechanical shear force in combination with a surfactant. The polyurethane resin in the above water dispersion may be obtained by the reaction of polyol with organic polyisocyanate and hydrophilic group-containing compound.

Examples of the polyol that may be used in the preparation of an aqueous dispersion of the above polyurethane resin include a polyester polyol, a polyether polyol, a polycarbonate polyol, and a polyolefin polyol.

Examples of the polyester polyol include condensed product of low molecular weight polyol such as ethylene glycol, diethylene glycol, triethylene glycol, 1,2- and 1,3 propylene glycol, neopentyl glycol, 1,3- and 1,4-butanediol, 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexanedimethanol, with polyvalent carboxylic acids such as succinic acid, glutaric acid, adipic acid, sebacic acid, phthalic acid, isophthalic acid, terephthalic acid, trimellitic acid, tetrahydrofuranic acid, endomethyltetrahydrofuranic acid and hexahydrophthalic acid.

Examples of the polyether polyol include polyethylene glycol, polypropylene glycol, polyethylene polytetramethylene glycol, polypropylene polytetramethylene glycol, and polytetramethylene glycol.

Examples of the polycarbonate polyol include compounds obtained by the reaction of carbonic acid derivatives such as diphenyl carbonate, dimethyl carbonate or phosgene with diols. Examples of the above diol include ethylene glycol, diethylene glycol, triethylene glycol, 1,2- and 1,3-propylene glycol, neopentyl glycol, 1,3- and 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexanedimethanol.

Examples of the organic polyisocyanate that may be used in the preparation of an aqueous dispersion of a polyurethane resin include aromatic isocyanates such as tolylene diisocyanate (TDI), diphenylmethane diisocyanate (MDI), polypeptide MDI, xylylene diisocyanate (XDI), tetramethylxylylene diisocyanate (TMXDI); aliphatic isocyanates such as hexamethylene diisocyanate (HMDI); and alicyclic isocyanates such as sophorone diisocyanate (IPDI) and 4,4'-dicyclohexylmethane diisocyanate (hydrogenated MDI, H12MDI). Only one of these types may be used alone, or two or more may be used in combination.

Examples of the hydrophilic group-containing compound that may be used in the preparation of an aqueous dispersion of a polyurethane resin include carboxylic acid-containing compounds such as 2,2-dimethylol propionic acid, 2,2-dimethylol butyric acid, 2,2-dimethylol lactic acid, 2,2-dimethylol valeric acid, and glycine and their derivatives such as sodium, potassium, and amine salts; sulfonic acid-containing compounds such as taurine (i.e., aminoethyl sulfonic acid) and ethoxypolyethylene glycol sulfonic acid and their derivatives such as sodium, potassium, and amine salts.

The polyurethane resins may be obtained by known methods. For example, the aforementioned polyol, organic polyisocyanate, and hydrophilic group-containing compound are mixed, and the mixture is heated at a temperature in the range of 30 to 130 °C for 30 minutes to 50 hours to obtain a urethane prepolymer.

The above urethane prepolymer is polymerized by elongation with a chain extender to become a polyurethane resin with a hydrophilic group. Water and/or amine compounds are preferred as chain extenders. By using water or an amine compound as a chain extender, the isocyanate-terminated prepolymer may be efficiently elongated by reacting with free isocyanate in a short time.

Examples of the amine compound as a chain extender include aliphatic polyamines such as ethylenediamine and triethylenediamine; aromatic polyamines such as meta-xylenediamine and toluylenediamine; polyhydrazino compounds such as hydrazine and adipic acid dihydrazide. The above amine compounds may contain, along with the above polyamines, monovalent amines such as dibutylamine and methyl ethyl ketoxime as a reaction stopper to the extent that polymerization is not significantly inhibited.

In the synthesis of urethane prepolymers, solvents that are inert to isocyanates and may dissolve the urethane prepolymers may be used. Examples of these solvents include dioxane, methyl ethyl ketone, dimethyl formamide, tetrahydrofuran, N-methyl-2-pyrrolidone, toluene, and propylene glycol monomethyl ether acetate. These hydrophilic organic solvents used in the reaction stage are preferably removed at the end.

Further, in the synthesis of urethane prepolymer, in order to promote the reaction, an amine catalyst (for example, triethylamine, N-ethylmorpholin, triethyldiamine,), tin catalysts (for example, dibutyltin dilaurate, dioctyltin dilaurate, tin octylate), and titanium catalysts (for example, tetrabutyl titanate) may be added.

The number average molecular weight (Mn) of the urethane resin is preferably made as large as possible by introducing a branched or internally cross-linked structure, and the number average molecular weight is preferably in the range of 50,000 to 10,000,000. This is because by keeping the molecular weight within the above range, the urethane resin is less soluble in solvents, resulting in a coating film with excellent weather resistance and water resistance. The number average molecular weight (Mn) is a value measured by gel permeation chromatography (GPC). For example, using a device "RID-6A" manufactured by Shimadzu Corporation (column: "TSK-GEL" manufactured by Tosoh Corporation, solvent: tetrahydrofuran (THF), column temperature: 40 °C), it may be obtained from the calibration curve prepared with polystyrene standard samples.

Commercially available products may be used for the above urethane resins. Examples of the commercially available urethane resin include WBR-016U (manufactured by Taisei Fine Chemical Co., Ltd.), Superflex 620, Superflex 650, Superflex 500M, Superflex E-2000 (all manufactured by Dai-ichi Kogyo Seiyaku Co., Ltd., "Superflex" is a registered trademark of the company), Permalyn UC-20 (manufactured by Sanyo Chemical Co. Ltd., "Permalyn" is a registered trademark of the company), and ParasurfUP-22 (manufactured by Ohara Palladium Chemical Co., Ltd.).

### (Polyacrylic resin)

The polyacrylic resin as the water insoluble resin fine particles may be obtained by using a copolymer with an acrylic acid ester component, a methacrylic acid ester component, or a styrene component.

Examples of the acrylic ester component and the methacrylic ester component include methyl (meth)acrylate, ethyl (meth)acrylate, propyl (meth)acrylate, butyl (meth)acrylate, 2-hydroxyethyl (meth)acrylate, 2-hydroxypropyl (meth)acrylate, 4-hydroxybutyl (meth)acrylate, cyclohexyl (meth)acrylate, tetrahydrofurfuryl (meth)acrylate, isobornyl (meth)acrylate, benzyl (meth)acrylate, 2-hydroxybutyl (meth)acrylate, benzyl (meth)acrylate, glycidyl (meth)acrylate, (meth)acrylic acid, (di)ethylene glycol di(meth)acrylate, 1,4-butanediol di(meth)acrylate, 1,6-hexanediol di(meth)acrylate, trimethylolpropane tri(meth)acrylate, glycerin di(meth)acrylate, 2-ethylhexyl (meth acrylate, lauryl (meth)acrylate, stearyl (meth)acrylate, and acrylamide.

Examples of the styrene component include styrene, 4-methylstyrene, 4-hydroxystyrene, 4-acetoxystyrene, and 4-acetylstyrene and styrenesulfonic acid. Only one of these components may be used alone, or two or more may be used in combination of two or more.

The number average molecular weight (Mn) of the above polyacrylic resin is preferably in the range of 1,000 to 50,000, more preferably in the range of 2,000 to 20,000. When the number average molecular weight (Mn) of the above polyacrylic resin is 1,000 or higher, the cohesive strength of the coating film becomes stronger and adhesion improves. When it is below 50,000, the solubility in organic solvents is good and the particle size of the emulsion dispersion is reduced to a smaller size.

Commercially available products may also be used as the above polyacrylic resins. Examples of the commercially available polyacrylic resin include acrylic emulsions such as RKW-620, UW-319SX, UW-600, and UW-550CS manufactured by Taisei Fine Chemical Co. Ltd., 2682, 2680, 2684, 2685, and 2687 manufactured by Nissin Chemical Industry Co., Ltd.

### (Composite resin fine particles)

The composite resin fine particles that may be contained in the pre-coat liquid are preferably composite resin fine particles obtained by emulsifying a polyacrylic resin into a polyurethane resin. That is, it is preferred that the composite resin fine particles have an inner layer composed of polyacrylic resin and a surface layer composed of polyurethane resin.

Here, the above polyurethane resin exists at the interface between the polyacrylic resin as water insoluble resin fine particles and water, which is the continuous phase, and functions as a water insoluble resin fine particle layer that is different from the resin protecting the water insoluble resin fine particles.

By using composite resin fine particles emulsified with polyacrylic resin by polyurethane resin in this way, unlike the use of polyacrylic resin alone, the reduction in compatibility with a polyurethane resin and a pigment aggregating agents may be suppressed. In addition, compared to emulsifying and mixing a polyacrylic resin and a polyurethane resin respectively, the physical properties of the image (coating film) may be improved and the stability of the pre-coat liquid may also be improved.

In the composite resin fine particles in which the above polyacrylic resin is emulsified into polyurethane resin, the value of the mass ratio of polyurethane resin (U) to polyacrylic resin (A) (U/A) is preferably in the range of 40/60 to 95/5. When the ratio of polyurethane resin (U) is within the above range, compatibility with the dispersing agent is improved and solvent resistance is also enhanced. When the percentage of polyacrylic resin (A) present is within the above range, adhesion to acrylic film is excellent. In the above existence ratio, the value of the mass ratio (U/A) of polyurethane resin (U) to polyacrylic resin (A) is preferably in the range of 40/60 to 80/20.

The total resin concentration of the polyacrylic resin and polyurethane resin combined in the composite resin fine particles is not particularly limited, but is preferably 5.0 mass% or more, and more preferably in the range of 10.0 to 70.0 mass%. When the above resin concentration is within the above range, the fixation between the substrate and ink is excellent.

In the emulsification of the polyacrylic resin by polyurethane resin, a surfactant that acts as an emulsifier may be used together with the above polyurethane resin. Here, the storage stability of the composite resin fine particles may be improved by adding an emulsifier.

An anionic surfactant and a nonionic surfactant may be used as an emulsifier described above. In the present invention, it is preferable to use either one of the above anionic surfactant and nonionic surfactant, and it is more preferable to use both. The total amount of the above anionic surfactant and nonionic surfactant is preferably in the range of 1.0 to 20.0 parts by mass to 100 parts by mass of the total resin. Further, by setting the total blending amount of the anionic surfactant and the nonionic surfactant to 20.0 parts by mass or less, the water resistance and the solvent resistance may be improved.

The value of the ratio of anionic surfactant (X) to nonionic surfactant (Y), (X/Y) is preferably in the range of 100/0 to 50/50. By setting the amount of anionic surfactant in the above range, emulsification and storage stability may be further improved.

Examples of the anionic surfactant that may be used for emulsification include alkyl sulfate, polyoxyethylene alkyl ether sulfate, sulfosuccinate, alpha-olefin sulfonate, N-acylamino acid salt, carboxylate, and phosphate ester. Among these, sulfosuccinate and alpha-olefin sulfonate are preferred.

Examples of the type of salt include, but are not limited to, metal salts such as sodium salt, potassium salt and magnesium salt, and triethanolamine salt.

Examples of the nonionic surfactant that may be used for emulsification include polyoxyethylene alkyl ethers, polyoxyethylene alkyl phenyl ethers, polyoxyethylene alkylamine ethers, polyoxyethylene fatty acid esters, sorbitan fatty acid esters, and sucrose fatty acid esters. Among these, polyoxyethylene alkyl ethers and polyoxyethylene alkyl phenyl ethers are preferred.

The average particle size of the composite resin fine particles described above is not particularly limited, but it is preferably in the range of 10 and 500 nm, and more preferably in the range of 10 to 300 nm, and still more preferably in the range of 10 to 200 nm. The average particle size may be measured using commercially available particle size analyzers that use dynamic light scattering, electrophoresis, or other methods, but measurement by dynamic light scattering is simpler and more accurate in the particle size range concerned.

By using the composite resin fine particles obtained by emulsifying the polyacrylic resin into the polyurethane resin, it is possible to improve the fixability of the image (coating film) on the low-absorbent substrate or the non-absorbent substrate.

The composite resin fine particles described above are preferably obtained by the following production method (I) or (II) for the composite resin fine particles using the polyacrylic resin and the polyurethane resin.

In addition, antioxidants, light stabilizers, plasticizers, foaming agents, thickeners, colorants, flame retardants, other water insoluble resin fine particles, and various fillers may be added to the pre-coat liquid according to the present invention.

Further, various cross-linking agents such as epoxy-based, carbodiimide-based, oxazolidine-based, blocked isocyanate-based, and isocyanate-based compounds may be added to the pre-coat liquid according to the present invention in order to impart higher durability.

### (Production method of composite resin fine particles)

The production method for the composite resin fine particles of the present invention will be described.

The composite resin fine particles described above may be prepared by the production method (I) or (II) described below.

### <Production method (I)>

Production method (I) is a method in which polyacrylic resin is emulsified in water by a urethane prepolymer having a hydrophilic group, and an amine compound or an aqueous solution thereof is added as a chain extender to extend the chain of the above urethane prepolymer (to increase the molecular weight).

In the production method (I), the resin solution obtained by dissolving a polyacrylic resin in a solvent is first mixed with a solution of urethane prepolymer having a hydrophilic group, and the mixture is emulsified by adding water and stirring to obtain an emulsion liquid.

Examples of the solvent above include organic solvents such as hexane, isohexane, pentane, cyclohexane, methylcyclohexane, heptane, isooctane, methyl ethyl ketone, xylene, toluene, benzene, and other solvents other than water such as carbon dioxide in supercritical conditions. Only one of these solvents may be used, or two or more may be used in combination.

For emulsification methods, known methods, such as forced emulsification, inverted phase emulsification, D-phase emulsification, and gel emulsification, may be used. Equipment that may be used in this method includes, for example, single stirring by agitator blades, dispersers, homogenizers, and combined stirring by a combination of these, sand mills, and multi-axis extruders. In the emulsification, the above surfactants may be mixed together with the urethane prepolymer.

Next, after diluting the above emulsion with water, an amine compound is added as a chain extender to cross-link the remaining isocyanate groups of the urethane prepolymer with the chain extender, thereby increasing the molecular weight of the polyacrylic resin. The organic solvent is then removed to obtain a composite resin fine particle dispersion (a dispersion of water insoluble resin fine particles) containing a polyacrylic resin inside a polyurethane resin.

### <Production method (II)>

Production method (II) is described below. Production method (II) is a method of emulsifying a urethane prepolymer having a hydrophilic group in water, and an amine compound as a chain extender or an aqueous solution thereof is added to extend the chain of the urethane prepolymer to form an aqueous dispersion of a polyurethane resin. This is a method of emulsifying a polyacrylic resin with an aqueous dispersion of a polyurethane resin.

In the production method (II), water is added to a solution of a urethane prepolymer having a hydrophilic group to emulsify it, and an amine compound as a chain extender is added to the resulting emulsion to cross-link the remaining isocyanate group of the urethane prepolymer with the chain extender to prepare an aqueous dispersion of a polyurethane resin having a high molecular weight.

Then, by mixing the resin solution obtained by dissolving the polyacrylic resin in a solvent and the aqueous dispersion of the polyurethane resin with a hydrophilic group mentioned above, the polyacrylic resin is emulsified by the polyurethane resin with a hydrophilic group, diluted with water. The organic solvent is then removed to obtain a composite resin fine particle dispersion (a dispersion of water insoluble resin fine particles) containing a polyacrylic resin inside a polyurethane resin.

In the production method (II), the same solvents as in the production method (I) may be selected for the solvents that may be used. In the emulsification method, the same method as in the production method (I) may be used.

The average particle size of the composite resin fine particles is not particularly limited, but it is preferably in the range of 10 to 500 nm, and more preferably, it is in the range of 10 to 300 nm, and still more preferably, in the range of 10 to 200 nm. The average particle size may be determined by commercially available particle size analyzers using dynamic light scattering, electrophoresis, or other methods. Among the above measurement methods, the dynamic light scattering method is preferred because it is simple to use and may accurately measure the particle size region.

These resins may be copolymers with other monomers.

The weight average molecular weight of the above composite resin particles is preferably in the range of 10,000 to 1,000,000. When the weight average molecular weight (Mw) of the above water insoluble resin particles is 10,000 or more, the cohesive force of the image (coating film) formed on the surface of the low-absorbent substrate or the non-absorbent substrate becomes stronger, and the adhesion of the coating film is improved. In addition, when the weight average molecular weight (Mw) of the coating film is 1,000,000 or less, the solubility in an organic solvent is good, and the miniaturization of the particle size of the emulsified dispersion is promoted. The weight average molecular weight (Mw) is a value measured by gel permeation chromatography (GPC). For example, using a device "RID-6A" manufactured by Shimadzu Corporation (column: "TSK-GEL" manufactured by Tosoh Corporation, solvent: tetrahydrofuran (THF), column temperature: 40 °C), it can be obtained from the calibration curve prepared with polystyrene standard samples.

Although the method for producing composite resin fine particles has been described as water insoluble resin fine particles, the present invention is not limited to this and commercially available composite resins may also be used. For example, commercially available urethane-acryl resins such as WEM-506 manufactured by Taisei Fine Chemical Co. Ltd., and Mowinyl 6910 manufactured by Japan Coating Resin Co., Ltd.

### (Water, other additives)

The water contained in the pre-coat liquid according to the present invention is not limited, and it may be ion-exchanged water, distilled water, or pure water.

Further, as the solvent of the pre-coat liquid according to the present invention, an organic solvent may be contained in addition to water. The solvent may be removed when the pre-coat liquid is dried in the subsequent stage.

The pre-coat liquid may be blended with other ingredients such as a surfactant, a cross-linking agent, an antifungal agent, and a bactericide disinfectant as appropriate, to the extent that the effects of the invention are not impaired.

In addition, the following compounds may be contained: UV absorbers described in JP-A 57-74193, JP-A 57-87988 and JP-A 62-261476; anti-fading agents and various anionic, cationic or nonionic surfactants described in JP-A 57-74192, JP-A 57-87989, JP-A 60-72785, JP-A 61-145691, JP-A 1-95091, and JP-A 3-13376; and various known additives such as fluorescent whitening agents, defoaming agents, lubricants such as diethylene glycol, preservatives, thickeners, and antistatic agents described in JP-A 59-429293, JP-A 59-52689, JP-A 62-28069, JP-A 61-242871 and JP-A 4-219266.

It is preferable to prepare the pre-coat layer by directly applying and drying the pre-coat liquid according to the present invention on the substrate as a coating liquid. Here, it is preferable that the additive preferably used for the pre-coat liquid is sufficiently dispersed before being used as the coating liquid.

As the application method of the pre-coat liquid, a roll coating method, a rod bar coating method, an air knife coating method, a spray coating method, a curtain coating method, an extrusion coating method using a hopper described in US Pat. No. 2,681,294, and an inkjet method are preferably used.

### [3] Aqueous ink composition

The aqueous ink compositions of the present invention (hereinafter referred to as "ink liquid" or simply "ink") is characterized in that it contains at least a pigment, a polymer dispersant for dispersing the pigment, and resin fine particles, and furthermore, it preferably contains water.

### (Pigment)

As a pigment contained in the ink according to the present invention, an anionic dispersed pigment, for example, an anionic self-dispersing pigment or a pigment dispersed with an anionic polymer dispersant may be used. In particular, a pigment dispersed with an anionic polymer dispersant is preferable.

As a pigment, conventionally known pigments may be used without particular limitation, and for example, organic pigments such as insoluble pigments and lake pigments, and inorganic pigments such as titanium oxide may be preferably used.

In titanium dioxide, where it is generally difficult to ensure ink discharge stability and adhesion, the present invention is particularly suitable for reducing bleeding and improving adhesion.

Titanium oxide has three crystal forms of anatase type, rutile type and blue kite type, and general-purpose ones may be roughly classified into anatase type and rutile type. Although not particularly limited, the rutile type having a large refractive index and high concealing property is preferable. Specific examples include the TR series of Fuji Titanium Industry Co., Ltd., the JR series of TAYCA Corporation, and TIPAQUE of Ishihara Sangyo Co., Ltd.

The insoluble pigments are not particularly limited. Examples thereof include azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, and diketopyrrolopyrrole are preferred.

Specific organic pigments that may be preferably used include the following pigments.

Examples of the pigment for magenta or red include C.I. Pigment Red 2, C.I. Pigment Red 3, C.I. Pigment Red 5, C.I. Pigment Red 6, and C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 202, C.I. Pigment Red 222, and C.I. Pigment Violet 19.

Examples of the pigment for orange or yellow include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C. I. Pigment Yellow 15:3, C.I. Pigment Yellow 17, C.I. Pigment Yellow 74, C.I. Pigment Yellow 93, C.I. Pigment Yellow 128, C.I. Pigment Yellow 94, C.I. Pigment Yellow 138, and C.I. Pigment Yellow 155. Pigment Yellow 155 is particularly preferred for its balance of color tone and lightfastness.

Examples of the pigment for green or cyan include C.I. Pigment Blue 15, C.I. Pigment Blue 15:2, C.I. Pigment Blue 15:3, C.I. Pigment Blue 16, C.I. Pigment Blue 60, and C.I. Pigment Green 7.

Examples of the pigment for black include C.I. Pigment Black 1, C.I. Pigment Black 6, C.I. and C.I. Pigment Black 7.

### (Pigment dispersant)

The pigment dispersant used to disperse the pigment is not particularly limited, but a polymer dispersant with an anionic group is preferred. The polymer dispersant having a molecular weight in the range of 5,000 to 200,000 may be suitably used.

Examples of the polymer dispersant include block copolymers, random copolymers and their salts derived from two or more monomers selected from styrene, styrene derivatives, vinylnaphthalene derivatives, acrylic acid, acrylic acid derivatives, maleic acid, maleic acid derivatives, itaconic acid, itaconic acid derivatives, fumaric acid, and fumaric acid derivatives, polyoxyalkylene, and polyoxyalkylene alkyl ethers.

The polymer dispersant preferably has an acryloyl group, and it is preferably added after being neutralized with a neutralizing base. The neutralizing base is not limited, but organic bases such as ammonia, monoethanolamine, diethanolamine, triethanolamine, and morpholine are preferred. In particular, when the pigment is titanium dioxide, the titanium dioxide is preferably dispersed with a polymer dispersant having an acryloyl group.

The amount of polymeric dispersant added is preferably in the range of 10 to 100 mass% of the pigment, and more preferably in the range of 10 to 40 mass%.

It is particularly preferable that the pigment is in the form of a so-called capsule pigment, in which the pigment is coated with the above-mentioned polymer dispersant. Various known methods may be used to coat the pigment with the polymer dispersant. For example, the inverted phase emulsification method, the acid deposition method, or the method in which the pigment is dispersed by a polymerizable surfactant, the monomer is supplied thereto, and the pigment is coated during polymerization are preferably exemplified.

A particularly preferred method is to dissolve the water insoluble resin in an organic solvent such as methyl ethyl ketone, partially or completely neutralize the acidic groups in the resin with a base, add pigment and ion-exchanged water, disperse, remove the organic solvent, and add water if necessary.

The average particle size of the pigment in dispersion in the ink is in the range of 50 nm or more to less than 200 nm. This range may improve the dispersion stability of the pigment and the storage stability of the ink. The particle size of the pigment may be measured using commercially available particle size measuring instruments that use dynamic light scattering, electrophoresis, or other methods, but the dynamic light scattering method is simple and may accurately measure the particle size region.

The pigments may be dispersed in a dispersing machine together with a dispersing agent and other additives as required for various desired purposes.

Examples of the disperser that may be used are a conventional ball mill, a sand mill, a line mill, and a high- pressure homogenizer. Among these, dispersing a pigment by a sand mill is preferred because the particle size distribution is sharper. The material of beads used for sand mill dispersion is not particularly limited, but zirconia or zircon is preferred from the viewpoint of preventing the formation of bead debris and contamination of ionic components. Furthermore, the bead diameter is preferably in the range of 0.3 to 3 mm.

The pigment content in the ink is not particularly limited, but for titanium dioxide, the range of 7 to 18 mass% is preferred, and for organic pigments, 0.5 to 7 mass% is the preferred range.

### (Resin fine particles)

The resin fine particles of the aqueous ink composition according to the present invention are preferably water insoluble resin fine particles. The water insoluble resin fine particles used in the present invention are a fine particle dispersion of water insoluble resin that may accept ink and exhibit solubility or affinity for the ink.

As described above, the water insoluble resin fine particles are originally water insoluble, but have a form in which the resin is dispersed in an aqueous medium as microscopic fine particles, and are forcibly emulsified using an emulsifier and dispersed in water. It is a self-emulsifying water insoluble resin or self-emulsifying product that introduces a hydrophilic functional group into the molecule to form a stable aqueous dispersion on its own without the use of emulsifiers or dispersion stabilizers. These resins are usually used in a state of being emulsified and dispersed in water or a water-alcohol mixed solvent.

The resin used is preferably at least one of a polyester resin, a polyurethane resin, a polyacrylic resin, or a composite resin of a polyurethane resin and a polyacrylic resin.

As for fine particles of the above-described polyester resin, polyurethane resin, polyacrylic resin, or composite resin of a polyurethane resin and a polyacrylic resin, those detailed in the aforementioned pre-coat liquid section should be used as appropriate. The resin fine particles used in the aqueous pre-coat composition are preferably cationic or nonionic in the ionic nature, whereas the resin fine particles used in the aqueous ink composition are preferably anionic.

Among them, the resin fine particles used in aqueous ink compositions preferably contain an acid structure, which makes it possible to disperse them in water even with a small amount of surfactant added, thereby improving the water resistance of the ink layer. This is called a self-emulsifying type, meaning that the urethane resin may be dispersed and stabilized in water only by molecular ionic properties without the use of a surfactant. Examples of acid structures include a carboxy group (-COOH), a sulfonic acid group (-SO₃H) and other acid groups. Acid structures may be present in the side chains or at the ends in the resin.

It is preferred that some or all of the above acid structure be neutralized. By neutralizing the acid structure, the water dispersibility of the resin may be improved. Organic amines are preferred as examples of the neutralizer that neutralizes the acid structure. Examples thereof are trimethylamine, triethylamine, tripropylamine, tributylamine, N-methyldiethanolamine, and triethanolamine.

The following are examples of commercially available resin fine particles used in the aqueous ink composition.

### (Polyester)

Pesresin A-110F, A-520, A-613D, A-615GE, A-640, A-645GH, and A-647GEX manufactured by Takamatsu Oil and Fat Co., Ltd.; and Elitel KA-5034, KA-5071S, KA-1449, KA-0134, KA-3556, KA-6137, KZA-6034, KT-8803, KT-8701, KT-9204, KT-8904, KT-0507, and KT-9511 manufactured by Unitika Co., Ltd.

### (Urethane)

NeoRez R-967, R-600, and R-9671 manufactured by Kusumoto Chemicals, Ltd.; and W-6001, W-5661, and WS-4000 manufactured by Mitsui Chemicals, Inc.

### (Acryl)

Mowinyl 6899D and 6969D, 6800, and 6810 manufactured by Japan Coating Resin Co. Ltd.; and TOCRYL W-7146, W-7150, and W-7152 manufactured by Toyochem Co. Ltd.

### (Organic solvent)

Water soluble organic solvents may be suitably used as an organic solvent contained in the ink. Examples of the water soluble organic solvent include alcohols, polyhydric alcohols, amines, amides, glycol ethers, and 1,2-alkanediols having 4 or more carbon atoms.

Examples of the alcohol include methanol, ethanol, 1-propanol, 2-propanol, 1-butanol, 2-butanol, 2-methyl-1-propanol, t-butanol, 3-methoxy-1-butanol, 3-methoxy-3-methylbutanol, 1-Octanol, 2-octanol, n-nonyl alcohol, tridecyl alcohol, n-undecyl alcohol, stearyl alcohol, oleyl alcohol, and benzyl alcohol.

Examples of the polyhydric alcohol include ethylene glycol, diethylene glycol, triethylene glycol, tetraethylene glycol, polyethylene glycol with 5 or more ethylene oxide groups, propylene glycol, dipropylene glycol, tripropylene glycol, polypropylene glycol with 4 or more propylene oxide groups, butylene glycol, hexanediol, pentanediol, glycerin, hexantriol, and thiodiglycol.

Examples of the amine include ethanolamine, diethanolamine, triethanolamine, N-methyldiethanolamine, N-ethyldiethanolamine, morpholine N-ethylmorpholine, ethylenediamine, diethylenediamine, triethylenetetetramine, tetraethylenepentamine, polyethyleneimine, pentamethyldiethylenetriamine, and tetramethylpropylenediamine.

Examples of the amide include formamide, N,N-dimethylformamide, and N,N-dimethylacetamide.

Examples of the glycol ether include ethylene glycol monoethyl ether, ethylene glycol monobutyl ether, diethylene glycol monoethyl ether, diethylene glycol monobutyl ether, triethylene glycol monobutyl ether, propylene glycol monopropyl ether, dipropylene glycol monomethyl ether, and tripropylene glycol monomethyl ether.

Examples of the 1,2-alkanediol having 4 or more carbon atoms include 1,2-butanediol, 1,2-pentanediol, 1,2-hexanediol, and 1,2-heptanediol.

Particularly preferred organic solvents are polyhydric alcohols, which may suitably suppress bleeding during high-speed printing. Specifically preferred are ethylene glycol, diethylene glycol, triethylene glycol, tetraethylene glycol, propylene glycol, dipropylene glycol, and tripropylene glycol.

The ink may contain one or a combination of two or more selected from these organic solvents.

The organic solvent content in the ink is not particularly limited, and preferably in the range of 10 to 60 mass%.

### (Water, other additives)

The water contained in the ink according to the present invention is not limited, and it may be ion-exchanged water, distilled water, or pure water.

The ink according to the present invention may contain various known additives as needed to improve surfactant property, emission stability, print head or ink cartridge compatibility, storage stability, image preservation, and other various performances.

The ink may also contain a surfactant. This may improve the stability of ink emission and control the spread (dot diameter) of droplets that land on the recording medium.

Surfactants that are used in the ink according to the present invention may be used without restriction, but when anionic compounds are included in the other components of the ink, the ionic nature of the surfactant is preferably an anionic, a nonionic or a betaine type.

In the present invention, the following surfactants are preferably used: fluorinated or silicone surfactants with high static surface tension lowering ability, anionic surfactants such as dioctyl sulfosuccinate with high dynamic surface tension lowering ability, nonionic surfactants such as polyoxyethylene alkyl ethers of relatively low molecular weight, polyoxyethylene alkylphenyl ethers polyoxyethylene alkyl phenyl ethers, acetylene glycols, Pluronic^{™} type surfactants, and sorbitan derivatives. It is also preferable to use fluorinated or silicone surfactants in combination with surfactants with high dynamic surface tension reduction ability.

The surfactant content in the ink is not particularly limited, but it is preferably in the range of 0.1 to 5.0 mass%.

In addition to the above, the inks used in the present invention may also be modified with various known additives, such as polysaccharides, viscosity adjusters, resistivity adjusters, film formers, UV absorbers, and other additives as needed to improve emission stability, print head and ink cartridge compatibility, storage stability, image preservation, and various other performance characteristics. Examples include oil droplet particles of liquid paraffin, dioctyl phthalate, tricresyl phosphate, and silicone oil; UV absorbers described in JP-A 57-74193, JP-A 57-87988, and JP-A 62-261476; anti-fading agents described in JP-A 57-74192, JP-A 57-87989, JP-A 60-72785, JP-A 61-146591, JP-A 1-95091, and JP-A 3-13376; and
fluorescent whitening agents described in JP-A 59-42993, JP-A 59-52689, JP-A 62-28069, JP-A 61-242871 and JP-A 4-219266.

The ink used in the present invention containing the above composition preferably has a viscosity in the range of 1 to 40 mPa·s at 25 °C, more preferably in the range of 2 to 10 mPa·s.

### [4] Inkjet recording method

The inkjet recording method of the present invention is characterized by combining the aqueous pre-coat composition and aqueous ink composition described above as an inkjet recording liquid set. In the method using this inkjet recording liquid set, for example, using one inkjet printer, the pre-coat liquid constituting the inkjet recording liquid set of the present invention is applied to the surface of the non-absorbent substrate, and the ink is applied continuously and efficiently. Then, it becomes possible to print characters and patterns with excellent image quality with little variation in dot diameter between the substrate.

Specifically, the inkjet recording method of the present invention contains: a pre-coat liquid application step in which the pre-coat liquid described above is applied to a low-absorbent or non-absorbent substrate recording medium; a pre-coat liquid drying step in which the pre-coat liquid applied to the low-absorbent or non-absorbent substrate is dried to form a pre-coat layer; then, an ink application step in which the ink described above is applied on the pre-coat layer by an inkjet method; and an ink drying step in which the ink applied on the pre-coat layer is dried to form an ink layer.

### [4.1] Pre-coat liquid application step

In the pre-coat liquid application step, the aforementioned pre-coat liquid is applied to a recording medium of a low-absorbent or non-absorbent substrate.

The method of applying the pre-coat liquid on the low-absorbent or non-absorbent substrate recording medium is not particularly limited. Preferable examples thereof include a roller coating method, a curtain coating method, a spray coating method, and an inkjet method. Among these, the roller coating method is preferred from the viewpoint that a roller coating machine may be connected to an inkjet device and may be used to efficiently apply even when the viscosity is relatively high.

In addition, it is preferable that the inkjet method is used as the step for applying the pre-coat liquid, from the viewpoint of improving the overall hot water resistance because it eliminates the need to apply an aggregating agent to the ink-uncoated area.

In such cases, as described below, when the substrate to be used is a metal substrate, it is preferable to place the metal substrate on a conveyor belt and apply and form the pre-coat layer while conveying the belt, or to use a flatbed type printer that fixes the substrate for forming the pre-coat layer.

### [4.2] Pre-coat liquid drying step

The pre-coat liquid drying step is a step of drying the pre-coat liquid imparted on the low-absorbent or non-absorbent substrate recording medium to form the pre-coat layer. However, this step may be omitted, and the step of applying the ink liquid may be performed continuously. In that case, the drying of the pre-coat liquid may be performed together with the drying of the ink liquid.

Drying of the pre-coat liquid is preferably performed under conditions that do not completely fuse the resin particles contained in the pre-coat liquid while removing the solvent components of the pre-coat liquid, such as water and water-soluble organic solvents. The drying temperature of the pre-coat liquid, for example, is preferably in the range of 50 to 100 °C. The drying time of the pre-coat liquid is preferably, for example, in the range of 3 to 30 seconds.

Drying of the pre-coat liquid may be performed, for example, using a non-contact heating type drying device such as a drying oven or hot air blower, or a contact heating type drying device such as a hot plate or hot roller.

The drying temperature is determined by the following ways: (a) when using a non-contact heating type drying device such as a drying furnace or a hot air blower, the atmospheric temperature such as the temperature inside the furnace or the hot air temperature, (b) when using a contact heating type drying device such as a hot plate or a heat roller, the temperature of the contact heating part, or (c) the surface temperature of the surface to be dried. The drying temperature may be obtained by measuring any one of the methods during the entire drying period of the pre-coat liquid, and the measurement location of (c) the surface temperature of the surface to be dried is more preferred.

The thickness of the resulting pre-coat layer is preferably in the range of 0.3 to 3.0 µm. The range of 5 to 2.0 µm is more preferred. When the thickness of the pre-coat layer is 0.3 µm or thicker, it is easier to improve image adhesion and lamination strength while suppressing ink bleeding. When the thickness of the pre-coat layer is 3.0 µm or less, the deformation stress caused by moisture and heat may be reduced, as a result, the image adhesion and lamination strength are less likely to be deteriorated.

### [4.3] Ink application step

In the ink application step, after the pre-coat layer is formed on the low-absorbent or non-absorbent substrate recording medium, the ink from the inkjet recording liquid set described above is applied by the inkjet method.

The inkjet method is not restricted and a printer equipped with an inkjet head loaded with ink may be used. Specifically, an ink is ejected as droplets from the nozzles of the inkjet print head based on digital signals, and these droplets land on the pre-coat layer of the film substrate to print.

The above inkjet head may be either on-demand or continuous inkjet heads.
Examples of the on-demand inkjet print head include electro-mechanical conversion type such as single-cavity type, double-cavity type, bender type, piston type, shear mode type, and sheared wall type, as well as electron-thermal conversion type including thermal inkjet type and bubble jet type ("Bubble Jet" is a registered trademark of Canon Inc.)

Among the above inkjet print heads, it is preferable to use an inkjet print head that uses a piezoelectric element (also called a piezoelectric inkjet print head) as the electro-mechanical conversion element used in the electro-mechanical conversion method.

The inkjet head may be either a scan type or a line type inkjet head, but the line type is preferred.

A line inkjet print head is an inkjet print head that has a length greater than or equal to the width of the printing range. A single line inkjet print head may be used that is longer than the width of the printing range, or multiple print heads may be combined to be longer than the width of the printing range.

Multiple heads may also be arranged in a staggered array of nozzles to increase the resolution of these heads as a whole.

The transport speed of the recording medium of low-absorbent or non-absorbent substrate may be set, for example, to 1 to 120 m/min. The faster transport speed, the faster the image formation speed. According to the present invention, it is possible to obtain a high-definition image having high ink fixing property even at a very high linear speed in the range of 50 to 120 m/min, which is applicable to a single-pass inkjet image forming method.

By including the above-mentioned water insoluble resin fine particles in the pre-coat liquid, the fixability of the image (coating film) to the recording medium of low-absorbent or non-absorbent substrate may be improved. In particular, by using a silicone surfactant (e.g., KF351A, Shin-Etsu Silicone Co., Ltd.), it is easy to wet and spread evenly on low-absorbent or non-absorbent substrates such as PP and PET, as a result, it is possible to improve the fixation of the image (coating) to the low-absorbent or non-absorbent substrate recording medium.

### []4.4 Ink drying step

In the ink drying step, the ink applied on the low-absorbent or non-absorbent substrate recording medium is dried.

Ink drying mainly removes the solvent components of the ink, such as water and water-soluble organic solvents, while simultaneously drying and thermally decomposing the aggregating agent according to the present invention at a temperature equal to or higher than the pyrolytic temperature. The upper limit of the drying temperature is 220 °C or lower, which is preferable from the viewpoint of both pyrolysis of the aggregating agent and stability of the ink composition. The drying time of the ink is controlled by at least the time for the thermal decomposition of the aggregating agent. The decomposition time is selected according to the type of aggregating agent to be selected, and may be determined accordingly from the viewpoint of the degree of thermal decomposition and productivity that may achieve the effect of the present invention.

Drying of the ink may be done in the same way as the drying of the pre-coat liquid described above.

### [5] Inkjet recording device

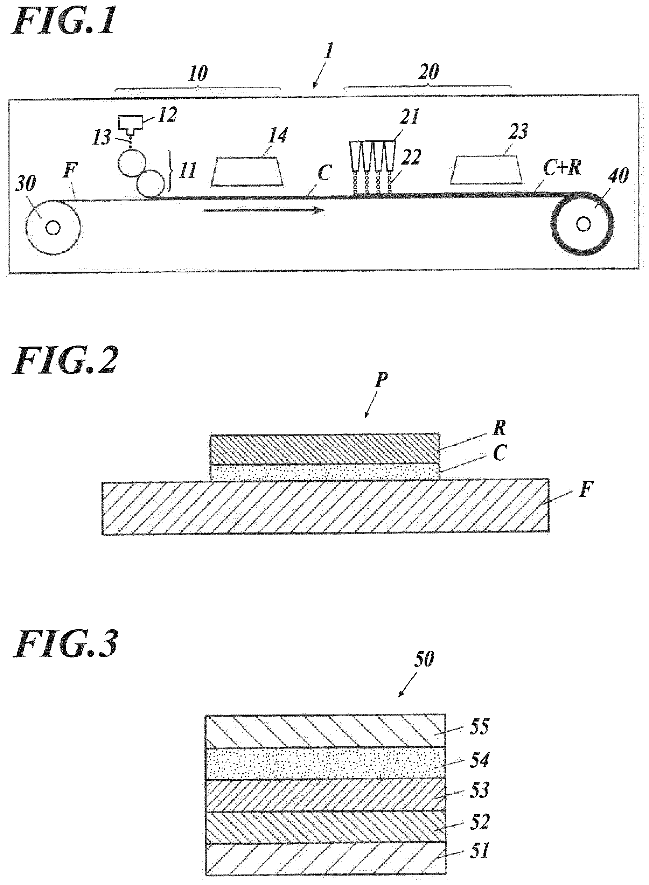

FIG. 1 is a schematic diagram of the preferred pre-coat/inkjet recording device of the present invention. However, the invention is not limited to this, for example, in the pre-coat/inkjet recording device 1 shown in FIG. 1, it is possible to omit the first drying section 14.

The pre-coat/inkjet recording device 1 mainly composed of a pre-coat liquid application section 10 and an inkjet printing section 20. In the pre-coat liquid application section 10, a pre-coat layer C is formed on the substrate F, and the ink layer R is formed by the inkjet printing section 20.

Specifically, the pre-coat droplets 13 discharged from the nozzles 12 by the roll coater 11 is applied onto the substrate F fed out from the feeding roller 30, and the pre-coat layer C is formed. Subsequently, the pre-coat layer C is dried by the first drying section 14.

Next, ink droplets 22 are ejected from the inkjet head 21 onto the pre-coat layer C to form an ink layer R. After drying at a temperature equal to or higher than the pyrolytic temperature of the aggregating agent according to the present invention by the second drying section 23, the substrate F on which the pre-coat layer C and the ink layer R are formed is wound by the take-up roller 40 to obtain an image recorded article.

In FIG. 1, the case where the substrate F is a film substrate is shown, but in the case of a metal substrate, the metal substrate is placed on the conveyor belt and the pre-coat layer C and ink layer R are formed while the belt is conveyed. The coating may be formed in one pass.

Further, other than the pre-coat/inkjet recording device shown in FIG. 1, it is also preferable to use a flatbed type printer for application of a pre-coat liquid and an ink liquid. In a flatbed type printer, the substrate is fixed and the inkjet head may be moved in the main scanning direction and the sub-scanning direction that intersects the main scanning direction, enabling printing without transporting the substrate. For metal substrates such as tinplate, it is preferable to use a flatbed type printer that does not need to transport the substrate because roll-to-roll transport is not possible, unlike resin film equipment.

As such a flatbed type printer, the printer described in FIG. 1 of JP-A 2015-74161 and FIG. 1 ofJP-A 2017-177578 may be mentioned as an example.

### [6] Image recorded article

The image recorded article of the present invention is characterized by having a substrate, a pre-coat layer formed on the substrate using the pre-coat liquid of the inkjet recording liquid set, and an ink layer formed on the pre-coat layer using the ink.

As shown in FIG. 2, the image recorded article P is formed as follows. The pre-coat liquid of the present invention is coated by a roll coater or by ejection from an inkjet head to form a pre-coat layer C on the substrate F. At the position where the pre-coat layer C is fixed, the ink liquid is discharged from an inkjet head and fixed to form an image recording layer R.

The above configuration is the minimum configuration, and other functional layers may be formed between the substrate and the pre-coat layer, or a non-absorbent film substrate may be bonded to the upper layer of the ink layer, for example, via a laminate adhesive layer. At least a configuration where the pre-coat layer and the ink layer are in contact is essential.

One example of an image recorded article using at least an aqueous pre-coat composition and an aqueous ink composition of the present invention is an image recorded article using, on a metal substrate, a first layer containing a thermosetting resin, a second layer containing an aqueous pre-coat composition, a third layer containing an aqueous ink composition and a fourth layer containing a thermosetting resin are preferably laminated in this order.

It is an image recorded article having a metal substrate having thereon at least four laminated layers in which the first and fourth layers contain a thermosetting resin, the second layer contains at least an aggregating agent, and the aggregating agent is selected from a pyrolytic cation resin, an organic acid or a polyvalent metal salt. The third layer contains at least a pigment, a polymer dispersant and resin fine particles, and a neutralizing agent for the polymer dispersant is selected from an organic amine. The third layer is dried at a temperature equal to or higher than the pyrolytic temperature of the aggregating agent.

As specific examples, packaging materials for packaging canned foods, retort pouch foods, and beverages, may be preferably cited as the image recorded article.

FIG. 3 shows a cross-sectional view of a packaging material for canned food products, it is an example of an image recorded article.

A thermosetting resin (for example, TW-1407 series, manufactured by & K TOKA Corporation) is roller-coated on the tinplate substrate 51 to form a thermosetting resin layer (base coat) 52, and a pre-coat layer 53 and an ink layer 54 are formed on the thermosetting resin layer (base coat) 52 to result in forming an image. Next, a thermosetting resin (for example, AX-10 series, manufactured by T&K TOKA Corporation) is applied by a roller to form a thermosetting resin layer (top coat) 55 and heat-cured and dried to obtain a packaging material 50 for canned food products.

### EXAMPLES

Hereinafter, the present invention will be specifically described with reference to examples, but the present invention is not limited thereto. Although the description of "parts" or "%" is used in the examples, it represents "parts by mass" or "mass% " unless otherwise specified.

The materials used in the preparation of the aqueous pre-coat compositions are as follows.

### (Aggregating agent)

Cationic polymer: PAS-21CL (Nittobo Medical Co., Ltd.), pyrolytic temperature: 180 °C
Multivalent metal salt 1: Calcium acetate, pyrolytic temperature: 160 °C
Organic acid: Malonic acid, pyrolytic temperature: 140 °C
Multivalent metal salt 2 (comparative example): Calcium chloride, boiling point: 1600 °C

### (Resin fine particles)

Polyester: Z-1100 (Goo Chemical Co., Ltd.)
Acryl: RKW-620 (Taisei Fine Chemical Co., Ltd.)
Urethane: SF650 (Dai-ichi Kogyo Seiyaku Co., Ltd.)
Urethane-acryl: WEM-506C (Taisei Fine Chemical Co., Ltd.)
(Surfactant): KF351A (Shin-Etsu Silicone Co., Ltd.)

The materials used in the preparation of the aqueous ink compositions are as follows.

### (Dispersant neutralizer)

Neutralizer 1: N-methyldiethanolamine
Neutralizer 2 (Comparative Example): NaOH

### (Resin fine particles)

Polyester: Pesresin A-645GH (Takamatsu Oil and Fat Co., Ltd.)
Polyacryl: NeoCryl A-1127 (Kusumoto Chemicals Co., Ltd.)
Polyurethane: W-6061 (Mitsui Chemicals, Inc.)
Urethane-acryl: WEM-041U (Taisei Fine Chemical Co., Ltd.)

### (Pigment): Pigment Blue 15:3

### (Dispersion resin): Joncryl 819 (BASF)

### (Ink solvent): Ethylene glycol

### (Surfactant): KF351A (Shin-Etsu Silicone Co., Ltd.)

### <Example 1>

### (Preparation of pre-coat composition)

14 mass% of Polyester resin Z-1100 (Goo Chemical Co., Ltd.) as resin fine particles, 5 mass% of cationic polymer PAS-21CL (Nittobo Medical Co., Ltd., pyrolytic temperature: 180 °C) as an aggregating agent, 0.5 mass% of surfactant KF3 51A (Shin-Etsu Silicone Co., Ltd.), and ion-exchanged water (remaining amount; a total amount to be 100 mass%) were added sequentially with stirring, and then filtered through a 5.0 µm filter to obtain a pre-coat composition. There was no substantial compositional change before and after filtration.

### (Preparation of ink composition)

To 18 mass% of Pigment (Pigment Blue 15:3) was added a mixture of 31.5 mass% of pigment dispersant (acrylic dispersant with carboxy groups neutralized by sodium hydroxide, "Joncryl 819" manufactured by BASF, acid value 75 mg KOH/g, solid content 20 mass%), 20 mass% of ethylene glycol, and ion-exchanged water (remaining amount; a total amount to be 100 mass%). After pre-mixing the mixture, the mixture was dispersed using a sand grinder filled with 0.5 mm zirconia beads at a volume ratio of 50 % to prepare a pigment dispersion liquid G-2 having a pigment content of 18 mass%. The average particle diameter of the pigment particles in this pigment dispersion was 110 nm. The average particle diameter was measured by "Zetasizer 1000HS" manufactured by Malvern Instruments.

To 27.8 mass% (5 mass% as solids) of the above pigment dispersion liquid were added with stirring 5 mass% of resin fine particles Pesresin A-645GH (Takamatsu Oil and Fat Co., Ltd.), 0.4 mass% of dispersant neutralizer N-methyldiethanolamine, 30 mass% of ethylene glycol, 0.5 mass% of surfactant KF351A (Shin-Etsu Silicone), and ion-exchanged water (remaining amount; a total volume to be 100 mass%). The resulting mixture was filtered through a 1 µm filter to obtain an ink composition. There was no substantial compositional change before and after filtration.

### <Preparation of pre-coat compositions and ink compositions for Examples 2 to 17 and Comparative Examples 1 to 3>

The pre-coat compositions and ink compositions for Examples 2 to 17 and Comparative Examples 1 to 3 were prepared in the same manner as preparation of the pre-coat composition and the ink composition of Example 1, except that the above pre-coat and ink composition materials were varied as shown in Table I through Table IV, respectively.

### <Formation of pre-coat layer and ink layer>

A roller coating method was used to apply the aqueous pre-coat composition to the tinplate substrate with a wet film thickness of 9 µm to achieve a resin solid content of 1.5 g/m². After application, the substrate was prepared by drying in warm air at 60 °C for 5 minutes. In Examples 4 and 17, the aqueous pre-coat composition was applied by the inkjet method.

Next, two independent drive inkjet heads (360 dpi, discharge rate 14 pL) manufactured by Konica Minolta Inc. were arranged side by side so that the nozzles were staggered, and a head module capable of printing a solid image of 720 dpi x 720 dpi in a single pass method was prepared. Two such head modules were prepared and installed side by side along the transport direction of the transport stage that carries the recording medium. Each head module was installed so that it intersected the transport direction (the axis of movement of the transport stage). In this way, when the recording medium is passed once, the printing rate of 200 %, that is, the amount of ink applied for two colors (22.5 cc/m²) may be printed.

The recording medium is placed on the transport stage with the aqueous pre-coat composition coated surface facing up, and transported at a speed of 60 m/min. The aqueous ink composition was printed in a single pass method as the medium passed under the head.

After printing by the inkjet method, the recording medium was placed in a dryer and dried for 15 minutes at each of the set temperatures shown in Table I through Table IV to obtain a laminate with a pre-coat layer and an ink layer.

In Examples 16 and 17, the roller application method was used to apply a base coat liquid made of a thermosetting resin (TW-1407 series, manufactured by T&K TOKA) so as to be 160 mg/100 cm². Then, it was dried at 190 °C for 10 minutes. The formations of the pre-coat layer and the ink layer were as described above.

Further, by the roller coating method, a top coat liquid (AX-10 series, T & K TOKA) made of a thermosetting resin was applied to the ink coated surface so as to be 160 mg/100 cm², and then dried at 180 °C for 10 minutes.

### «Evaluation»

### (1) Measurement of pyrolytic temperature of aggregating agent

The pyrolytic temperature of the aggregating agent was measured by thermogravimetric differential thermal analysis (TG-DTA).

The "pyrolytic temperature" means the temperature at which mass reduction due to pyrolysis begins when the temperature is raised from room temperature (heating speed: 10 °C/min). For the temperature at which the mass reduction starts, a graph plotting the mass reduction rate on the vertical axis and the temperature on the horizontal axis is drawn, and the temperature at the intersection of the tangent line at the time of the largest mass reduction and the tangent line before the mass reduction is used. An instrument STA7200 manufactured by Hitachi High-Tech Science Corporation was used for the measurement. The pyrolytic temperature of each aggregating agent was measured according to the above definition.

### (2) Hot water resistance

The solid images formed above for evaluation of Examples 1 to 17 and Comparative Examples 1 to 3 were stored at 40 °C for 3 days, and then cut into strips of 10 cm x 1 cm so that the image portion became the cut end face. They were used as test pieces. The test pieces were boiled in a pressure cooker for 30 minutes, the appearance of the test pieces after boiling was visually checked, and the hot water resistance of the image with each ink was evaluated using the following criteria. A rating of 2 or higher is acceptable for practical use.

4: There is no peeling in both the image of the cut end face and the image of the solid image.
3: There is peeling in a part of the image of the cut end face, but there is no peeling in the solid image.
2: The image of the cut end face and a part of the solid image are peeled off.
1: Most of the image of the cut end face and the image of the solid image are peeled off.

The configurations of the pre-coat layer and the ink layer and the evaluation results are shown in Table I to Table IV.

### Table I

**Table I**

| | | | | Example 1 | Example 2 | Example 3 | Example 4 | Example 5 | Example 6 |
|---|---|---|---|---|---|---|---|---|---|
| Ink composition | Dispersant neutralizer | | N-methyldiethanolamine | 0.4 mass % | 0.4 mass % | 0.4 mass % | 0.4 mass % | 0.4 mass % | 0.4 mass % |
| | | | NaOH | - | - | - | - | - | - |
| | Resin fine particles | Polyester | Pesresin A-645GH (Takamatsu Oil & Fat) | 5 mass % | 5 mass % | 5 mass % | 5 mass % | 5 mass % | 5 mass % |
| | | Polyacryl | NeoCryl A-1127(Kusumoto Chemicals) | - | - | - | - | - | - |
| | | Polyurethane | W-6061 (Mitsui Chemicals) | - | - | - | - | - | - |
| | | Urethane-acryl | WEM-041U (Taisei Fine Chemical) | - | - | - | - | - | - |
| | Pigment (Pigment Blue 15:3) | | | 5 mass % | 5 mass % | 5 mass % | 5 mass % | 5 mass % | 5 mass % |
| | Dispersion resin (Joncryl 819(BASF)) | | | 2 mass % | 2 mass % | 2 mass % | 2 mass % | 2 mass % | 2 mass % |
| | Ink solvent | | Ethylene glycol | 30 mass % | 30 mass % | 30 mass % | 30 mass % | 30 mass % | 30 mass % |
| | Surfactant | | KF351A (Shin-Etsu Silicone) | 0.5 mass % | 0.5 mass % | 0.5 mass % | 0.5 mass % | 0.5 mass % | 0.5 mass % |
| | Water | | | Remaining amount | Remaining amount | Remaining amount | Remaining amount | Remaining amount | Remaining amount |
| Pre-coat composition | Aggregating agent | Cation polymer | PAS-21CL (Nittobo Medical), Pyrolytic temperature 180°C | 6 mass % | - | - | - | - | - |
| | | Multivalent metal salt 1 | Calcium acetate (Pyrolytic temperature: 160°C) | - | 6 mass % | - | - | - | - |
| | | Organic acid | Malonic acid (Pyrolytic temperature: 140°C) | - | - | 6 mass % | 6 mass % | 5 mass % | 6 mass % |
| | | Multivalent metal salt 2 | Calcium chloride (Boiling point: 1600°C) | - | - | - | - | - | - |
| | Resin fine particles | Polyester | Z-1100 (Goo Chemical) | - | - | - | - | - | |
| | | Polyacryl | RKW-620 (Taisei Fine Chemical) | - | - | - | - | - | - |
| | | . Polyurethane | SF650 (Dai-ichi Kogyo Seiyaku) | - | - | - | - | - | - |
| | | Urethane-acryl | WEM-506C (Taisei Fine Chemical) | - | - | - | - | - | - |
| | Surfactant | | KF351A (Shin-Etsu Silicone) | 0.5 mass % | 0.5 mass % | 0.5 mass % | 0.5 mass % | 0.5 mass % | 0.5 mass % |
| | Water | | | Remaining amount | Remaining amount | Remaining amount | Remaining amount | Remaining amount | Remaining amount |
| Process | Drying temperature | | | 230°C | 230°C | 230°C | 230°C | 230°C | 140°C |
| | Pre-coat coating method (R/C: Roll Coater, IJ: Inkjet) | | | R/C | R/C | R/C | IJ | R/C | ft; C |
| Structure of substrate | Presence or absence of thermosetting resin base coat/top coat | | | Absence | Absence | Absence | Absence | Absence | Absence |
| Evaluation | Hot-water resistance | | | 2 | 2 | 2 | 3 | 3 | 3 |

### Table II

**Table II**

| | | | | Example 7 | Example 8 | Example 9 | Example 10 | Example 11 | Example 12 |
|---|---|---|---|---|---|---|---|---|---|
| Ink composition | Dispersant neutralizer | | N-methyldiethanolamine | 0.4 mass % | 0.4 mass % | 0.4 mass % | 0.4 mass % | 0.4 mass % | 0.4 mass % |
| | | | NaOH | - | - | - | - | - | - |
| | Resin fine particles | Polyester | Pesresin A-645GH (Takamatsu Oil & Fat) | 5 mass % | 5 mass % | - | - | - | 5 mass % |
| | | Polyacryl | NeoCryl A-1127(Kusumoto Chemicals) | - | - | 5 mass % | - | - | - |
| | | Polyurethane | W-6061 (Mitsui Chemicals) | - | - | - | 5 mass % | - | - |
| | | Urethane-acryl | WEM-041U (Taisei Fine Chemical) | | | - | | 5 mass % | - |
| | Pigment (Pigment Blue 15:3) | | | 5 mass % | 5 mass % | 5 mass % | 5 mass % | 5 mass % | 5 mass % |
| | Dispersion resin (Joncryl 819(BASF)) | | | 2 mass % | 2 mass % | 2 mass % | 2 mass % | 2 mass % | 2 mass % |
| | Ink solvent | | Ethylene glycol | 30 mass % | 30 mass % | 30 mass % | 30 mass % | 30 mass % | 30 mass % |
| | Surfactant | | KF351A (Shin-Etsu Silicone) | 0.5 mass % | 0.5 mass % | 0.5 mass % | 0.5 mass % | 0.5 mass % | 0.5 mass % |
| | Water | | | Remaining amount | Remaining amount | Remaining amount | Remaining amount | Remaining amount | Remaining amount |
| Pre-coat composition | Aggregating agent | Cation polymer | PAS-21CL (Nittobo Medical), Pyrolytic temperature 180°C | - | - | - | - | - | - |
| | | Multivalent metal salt 1 | Calcium acetate (Pyrolytic temperature: 160°C) | - | - | - | - | - | - |
| | | Organic acid | Malonic acid (Pyrolytic temperature: 140°C) | 6 mass % | 6 mass % | 6 mass % | 6 mass % | 6 mass % | 6 mass % |
| | | Multivalent metal salt 2 | Calcium chloride (Boiling point: 1600°C) | | - | - | - | - | - |
| | Resin fine particles | Polyester | Z-1100 (Goo Chemical) | | - | - | - | - | 14 mass % |
| | | Polyacryl | RKW-620 (Taisei Fine Chemical) | | - | - | - | - | - |
| | | Polyurethane | SF650 (Dai-ichi Kogyo Seiyaku) | - | - | - | - | - | - |
| | | Urethane-acryl | WEM-506C (Taisei Fine Chemical) | - | - | - | - | - | - |
| | Surfactant | | KF351A (Shin-Etsu Silicone) | 0.5 mass % | 0.5 mass % | 0.5 mass % | 0.5 mass % | 0.5 mass % | 0.5 mass % |
| | Water | | | Remaining amount | Remaining amount | Remaining amount | Remaining amount | Remaining amount | Remaining amount |
| Process | Drying temperature | | | 180°C | 220°C | 230°C | 230°C | 230°C | 230°C |
| | Pre-coat coating method (R/C: Roll Coater, IJ: Inkjet) | | | R/C | R/C | R/C | R/C | R/C | R/C |
| Structure of substrate | Presence or absence of thermosetting resin base coat/top coat | | | Absence | Absence | Absence | Absence | Absence | Absence |
| Evaluation | Hot-water resistance | | | 3 | 3 | 3 | 3 | 3 | 3 |

### Table III

**Table III**

| | | | | Example 13 | Example 14 | Example 15 | Example 16 | Example 17 |
|---|---|---|---|---|---|---|---|---|
| Ink composition | Dispersant neutralizer | | N-methyldiethanolamine | 0.4 mass % | 0.4 mass % | 0.4 mass % | 0.4 mass % | 0.4 mass % |
| | | | NaOH | - | - | - | - | - |
| | Resin fine particles | Polyester | Pesresin A-645GH (Takamatsu Oil & Fat) | 5 mass % | 5 mass % | 5 mass % | 5 mass % | - |
| | | Polyacryl | NeoCryl A-1127(Kusumoto Chemicals) | - | - | - | - | 5 mass % |
| | | Polyurethane | W-6061 (Mitsui Chemicals) | - | - | - | - | - |
| | | Urethane-acryl | WEM-041U (Taisei Fine Chemical) | - | - | - | - | - |
| | Pigment (Pigment Blue 15:3) | | | 5 mass % | 5 mass % | 5 mass % | 5 mass % | 5 mass % |
| | | Dispersion | resin (Joncryl 819(BASF)) | 2 mass % | 2 mass % | 2 mass % | 2 mass % | 2 mass % |
| | Ink | solvent | Ethylene glycol | 30 mass % | 30 mass % | 30 mass % | 30 mass % | 30 mass % |
| | | Surfactant | KF351A (Shin-Etsu Silicone) | 0.5 mass % | 0.5 mass % | 0.5 mass % | 0.5 mass % | 0.5 mass % |
| | Water | | | Remaining amount | Remaining amount | Remaining amount | Remaining amount | Remaining amount |
| Pre-coat composition | Aggregating agent | Cation polymer | PAS-21CL (Nittobo Medical), Pyrolytic temperature 180°C | - | - | - | - | - |
| | | Multivalent metal salt 1 | Calcium acetate (Pyrolytic tem p erature: 160°C) | - | - | - | - | |
| | | Organic acid | Malonic acid (Pyrolytic temperature: 140°C) | 6 mass % | 6 mass % | 6 mass % | 6 mass % | 5 mass % |
| | | Multivalent metal salt 2 | Calcium chloride (Boiling point 1600°C) | - | - | - | - | - |
| | Resin fine particles | Polyester | Z-1100 (Goo Chemical) | - | - | - | - | - |
| | | Polyacryl | RKW-620 (Taisei Fine Chemical) | 14 mass % | - | - | - | - |
| | | Polyurethane | SF650 (Dai-ichi Kogyo Seiyaku) | - | 14 mass % | - | - | 14 mass % |
| | | Urethane-acryl | WEM-506C (Taisei Fine Chemical) | - | - | 14 mass % | - | - |
| | Surfactant | | KF351A (Shin-Etsu Silicone) | 0.5 mass % | 0.5 mass % | 0.5 mass % | 0.5 mass % | 0.5 mass % |
| | Water | | | Remaining amount | Remaining amount | Remaining amount | Remaining amount | Remaining amount |
| Process | Drying temperature | | | 230°C | 230°C | 230°C | 230°C | 140°C |
| | Pre-coat coating method (R/C: Roll Coater, IJ: Inkjet) | | | R/C | R/C | R/C | R/C | IJ |
| Structure of substrate | Presence or absence of thermosetting resin base coat/top coat | | | Absence | Absence | Absence | Presence | Presence |
| Evaluation | Hot-water resistance | | | 3 | 3 | 3 | 3 | 4 |

### Table IV

**Table IV**

| | | | | Comparative Example 1 | Comparative Example 2 | Comparative Example 3 |
|---|---|---|---|---|---|---|
| Ink composition | Dispersant neutralizer | | N-methyldiethanolamine | - | 0.4 mass % | 0.4 mass % |
| | | | NaOH | 0.1 mass % | - | - |
| | Resin fine particles | Polyester | Pesresin A-645GH (Takamatsu Oil & Fat) | 5 mass % | 5 mass % | 5 mass % |
| | | Polyacryl | NeoCryl A-1127(Kusumoto Chemicals) | - | - | - |
| | | Polyurethane | W-6061 (Mitsui Chemicals) | - | - | - |
| | | Urethane-acryl | WEM-041U (Taisei Fine Chemical) | - | - | - |
| | Pigment (Pigment Blue 15:3) | | | 5 mass % | 5 mass % | 5 mass % |
| | Dispersion resin (Joncryl 819(BASF)) | | | 2 mass % | 2 mass % | 2 mass % |
| | Ink solvent | | Ethylene glycol | 30 mass % | 30 mass % | 30 mass % |
| | Surfactant | | KF351A (Shin-Etsu Silicone) | 0.5 mass % | 0.5 mass % | 0.5 mass % |
| | Water | | | Remaining amount | Remaining amount | Remaining amount |
| Pre-coat composition | Aggregating agent | Cation polymer | PAS-21CL (Nittobo Medical), Pyrolytic temperature 180°C | - | - | - |
| | | Multivalent metal salt 1 | Calcium acetate (Pyrolytic temperature: 160°C) | - | - | - |
| | | Organic acid | Malonic acid (Pyrolytic temperature: 140°C) | 6 mass % | - | 6 mass % |
| | | Multivalent metal salt 2 | Calcium chloride (Boiling point 1600°C) | - | 6 mass % | - |
| | Resin fine particles | Polyester | Z-1100 (Goo Chemical) | - | - | - |
| | | Polyacryl | RKW-620 (Taisei Fine Chemical) | - | - | - |
| | | Polyurethane | SF650 (Dai-ichi Kogyo Seiyaku) | - | - | - |
| | | Urethane-acryl | WEM-506C (Taisei Fine Chemical) | - | - | - |
| | | Surfactant | KF351A (Shin-Etsu Silicone) | 0.5 mass % | 0.5 mass % | 0.5 mass % |
| | Water | | | Remaining amount | Remaining amount | Remaining |
| Process | Drying temperature | | | 230°C | 140°C | amount 120°C |
| | Pre-coat coating method (R/C: Roll Coater. IJ: Inkjet) | | | R/C | R/C | R/C |
| Structure of substrate | Presence or absence of thermosetting resin base coat/top coat | | | Absence | Absence | Absence |
| Evaluation | Hot-water resistance | | | 1 | 1 | 1 |

From Table I to Table IV, it is clear that the inkjet recordng methods of Examples 1 to 17 using the pre-coat composition and the ink composition of the present invention are superior in hot water resistance to Comparative Examples 1 to 3.

In contrast Example 3, in Examples 6 to 8, when the drying temperature was set to 220°C or lower, the hot water resistance was improved. Similarly, in Examples 9 to 11, compared to Example 3, the polyester resin replaced with a polyurethane resin, a plyacrylic resin, or a compositive resin of a polyurethane resin and a polyacrylic resin as the resin fine particles in the ink composition, and it was found that the hot water resistance was improved.

Further, in Examples 16 and 17, using a metal substrate, a pre-coat layer and an ink layer were laminated with a thermosetting resin layer (base coat and top coat) to form a packaging material for canned foods. When the same evaluation was performed, the image recorded article was found to be excellent in hot water resistance.

### Industrial Availability

The inkjet recording method of the present invention is a two-component inkjet recording method that forms an image on a pre-coat coating film, and is suitable for use in inkjet recording on packaging materials for packaging canned food, retort pouch food and beverages, due to its improved hot water resistance.

### Description of Symbols

- 1:: Pre-coat/Inkjet recording device
- 10:: Pre-coat liquid application section
- 11:: Roll coater
- 12:: Nozzles
- 13:: Pre-coat droplets
- 14:: First drying section
- 20:: Inkjet printing section
- 21:: Inkjet head
- 22:: Ink droplets
- 23:: Second drying section
- 30:: Feeding roller
- 40:: Take-up roller
- C:: Pre-coat layer
- F:: Substrate
- P:: Image recorded article
- R:: Ink layer
- 50:: Packaging material for canned food product
- 51:: Tinplate substrate
- 52:: Thermosetting resin layer (base coat)
- 53:: Pre-coat layer
- 54:: Ink layer
- 55:: Thermosetting resin layer (top coat)

## Claims

1. An inkjet recording method comprising the sequential steps of:
applying an aqueous pre-coat composition to a substrate (F), or applying and drying the aqueous pre-coat composition to the substrate (F); and
subsequently applying and drying an aqueous ink composition,
wherein the aqueous pre-coat composition contains at least an aggregating agent; the aqueous ink composition contains at least a pigment, a polymer dispersant, and resin fine particles; the aggregating agent is selected from a pyrolytic cation resin, an organic acid, or a multivalent metal salt; a neutralizer for the polymer dispersant is selected from an organic amine; **characterized in that**,
in the step of drying the aqueous ink composition, a temperature at which the aqueous ink composition is dried is set to be equal to or higher than a pyrolytic temperature of the aggregating agent.

2. The inkjet recording method according to claim 1, wherein the step of applying the aqueous pre-coat composition is a step of using an inkjet method.

3. The inkjet recording method according to claim 1 or 2, wherein a content of the aggregating agent is 5 mass% or less with respect to the aqueous pre-coat composition.

4. The inkjet recording method according to any one of claims 1 to 3, wherein a temperature at which the aqueous ink composition is dried is 220 °C or lower.

5. The inkjet recording method according to any one of claims 1 to 4, wherein a resin of the resin fine particles of the aqueous ink composition is selected from a polyurethane resin, a polyacrylic resin, or a composite resin of a polyurethane resin and a polyacrylic resin.

6. The inkjet recording method according to any one of claims 1 to 5, wherein the aqueous pre-coat composition further contains resin fine particles, and a resin of the resin fine particles is selected from a polyester resin, a polyurethane resin, a polyacrylic resin, or a composite resin of a polyurethane resin and a polyacrylic resin.

7. An image recorded article (P) comprising a metal substrate (F) having thereon at least four laminated layers, wherein a first layer (52) and a fourth layer (54) each contain a thermoplastic resin;
a second layer (53) contains at least an aggregating agent, the aggregating agent being selected from a pyrolytic cation resin, an organic acid, or a multivalent metal salt; and
a third layer (54) contains at least a pigment, a polymer dispersant, and resin fine particles,
**characterized in that**,
the third layer is dried at a temperature equal to or higher than a pyrolytic temperature of the aggregating agent.

8. The image recorded article (P) according to claim 7, wherein a content of the aggregating agent is 5 mass% or less with respect to the second layer.

9. The image recorded article (P) according to claim 7 or 8, wherein a resin of the resin fine particles contained in the third layer is selected from a polyurethane resin, a polyacrylic resin, or a composite resin of a polyurethane resin and a polyacrylic resin.

10. The image recorded article (P) according to any one of claims 7 to 9, wherein the second layer further contains resin fine particles, and a resin of the resin fine particles is selected from a polyurethane resin, a polyacrylic resin, or a composite resin of a polyurethane resin and a polyacrylic resin.

## Patentansprüche

1. Ein Tintenstrahlaufzeichnungsverfahren, das die folgenden aufeinanderfolgenden Schritte umfasst:
Auftragen einer wässrigen Vorbeschichtungszusammensetzung auf ein Substrat (F) oder Auftragen und Trocknen der wässrigen Vorbeschichtungszusammensetzung auf das Substrat (F); und
anschließendes Auftragen und Trocknen einer wässrigen Tintenzusammensetzung,
wobei die wässrige Vorbeschichtungszusammensetzung mindestens ein Aggregationsmittel enthält; die wässrige Tintenzusammensetzung mindestens ein Pigment, ein Polymerdispergiermittel und feine Harzteilchen enthält; das Aggregationsmittel ausgewählt ist aus einem pyrolytischen Kationenharz, einer organischen Säure oder einem mehrwertigen Metallsalz; ein Neutralisationsmittel für das Polymerdispergiermittel ausgewählt ist aus einem organischen Amin; **dadurch gekennzeichnet, dass**
in dem Schritt des Trocknens der wässrigen Tintenzusammensetzung eine Temperatur, bei der die wässrige Tintenzusammensetzung getrocknet wird, so eingestellt wird, dass sie gleich oder höher als eine Pyrolysetemperatur des Aggregationsmittels ist.

2. Tintenstrahlaufzeichnungsverfahren nach Anspruch 1, wobei der Schritt des Auftragens der wässrigen Vorbeschichtungszusammensetzung ein Schritt der Verwendung eines Tintenstrahlverfahrens ist.

3. Tintenstrahlaufzeichnungsverfahren nach Anspruch 1 oder 2, wobei der Gehalt des Aggregationsmittels 5 Gew.-% oder weniger, bezogen auf die wässrige Vorbeschichtungszusammensetzung, beträgt.

4. Tintenstrahlaufzeichnungsverfahren nach einem der Ansprüche 1 bis 3, wobei die Temperatur, bei der die wässrige Tintenzusammensetzung getrocknet wird, 220 °C oder weniger beträgt.

5. Tintenstrahlaufzeichnungsverfahren nach einem der Ansprüche 1 bis 4, wobei ein Harz der feinen Harzteilchen der wässrigen Tintenzusammensetzung aus einem Polyurethanharz, einem Polyacrylharz oder einem Verbundharz aus einem Polyurethanharz und einem Polyacrylharz ausgewählt ist.

6. Tintenstrahlaufzeichnungsverfahren nach einem der Ansprüche 1 bis 5, wobei die wässrige Vorbeschichtungszusammensetzung weiterhin feine Harzteilchen enthält und ein Harz der feinen Harzteilchen aus einem Polyesterharz, einem Polyurethanharz, einem Polyacrylharz oder einem Verbundharz aus einem Polyurethanharz und einem Polyacrylharz ausgewählt ist.

7. Bildaufzeichnungsgegenstand (P) mit einem Metallsubstrat (F), auf dem sich mindestens vier laminierte Schichten befinden, wobei eine erste Schicht (52) und eine vierte Schicht (54) jeweils ein thermoplastisches Harz enthalten;
eine zweite Schicht (53) mindestens ein Aggregationsmittel enthält, wobei das Aggregationsmittel ausgewählt ist aus einem pyrolytischen Kationenharz, einer organischen Säure oder einem mehrwertigen Metallsalz; und
eine dritte Schicht (54) die mindestens ein Pigment, ein Polymerdispergiermittel und feine Harzteilchen enthält,
**dadurch gekennzeichnet, dass**
die dritte Schicht bei einer Temperatur getrocknet wird, die gleich oder höher als die Pyrolysetemperatur des Aggregationsmittels ist.

8. Bildaufzeichnungsgegenstand (P) nach Anspruch 7, wobei der Gehalt des Aggregationsmittels 5 Gew.-% oder weniger, bezogen auf die zweite Schicht, beträgt.

9. Bildaufzeichnungsgegenstand (P) nach Anspruch 7 oder 8, wobei ein Harz der in der dritten Schicht enthaltenen feinen Harzteilchen aus einem Polyurethanharz, einem Polyacrylharz oder einem Verbundharz aus einem Polyurethanharz und einem Polyacrylharz ausgewählt ist.

10. Bildaufzeichnungsgegenstand (P) nach einem der Ansprüche 7 bis 9, wobei die zweite Schicht ferner feine Harzteilchen enthält und ein Harz der feinen Harzteilchen aus einem Polyurethanharz, einem Polyacrylharz oder einem Verbundharz aus einem Polyurethanharz und einem Polyacrylharz ausgewählt ist.

## Revendications

1. Procédé d'enregistrement à jet d'encre comprenant les étapes séquentielles de :
appliquer une composition aqueuse de pré-couche à un substrat (F), ou appliquer et sécher la composition aqueuse de pré-couche au substrat (F) ; et
ultérieurement appliquer et sécher une composition d'encre aqueuse,
dans lequel la composition aqueuse de pré-couche contient au moins un agent agrégant ; la composition aqueuse d'encre contient au moins un pigment, un dispersant polymère et des particules fines de résine ; l'agent agrégant est choisi parmi une résine de cation pyrolytique, un acide organique ou un sel métallique multivalent ; un neutralisant pour le dispersant polymère est choisi parmi une amine organique ; **caractérisée en ce que**,
dans l'étape de séchage de la composition aqueuse d'encre, une température à laquelle la composition aqueuse d'encre est séchée est réglée pour être égale ou supérieure à une température pyrolytique de l'agent agrégant.

2. Procédé d'enregistrement à jet d'encre selon la revendication 1, dans lequel l'étape d'application de la composition aqueuse de pré-couche est une étape d'utilisation d'un procédé à jet d'encre.

3. Procédé d'enregistrement à jet d'encre selon la revendication 1 ou 2, dans lequel la teneur en agent agrégant est de 5 % en masse ou moins par rapport à la composition aqueuse de pré-couche.

4. Procédé d'enregistrement à jet d'encre selon l'une quelconque des revendications 1 à 3, dans lequel la température à laquelle la composition aqueuse d'encre est séchée est de 220 °C ou inférieure.

5. Procédé d'enregistrement à jet d'encre selon l'une quelconque des revendications 1 à 4, dans lequel une résine des fines particules de résine de la composition aqueuse d'encre est choisie parmi une résine de polyuréthane, une résine polyacrylique ou une résine composite d'une résine de polyuréthane et d'une résine polyacrylique.

6. Procédé d'enregistrement à jet d'encre selon l'une quelconque des revendications 1 à 5, dans lequel la composition aqueuse de pré-couche contient en outre des particules fines de résine, et une résine des particules fines de résine est choisie parmi une résine de polyester, une résine de polyuréthane, une résine polyacrylique, ou une résine composite d'une résine de polyuréthane et d'une résine polyacrylique.

7. Article enregistré d'image (P) comprenant un substrat métallique (F) ayant làdessus au moins quatre couches stratifiées, dans lequel une première couche (52) et une quatrième couche (54) contiennent chacune une résine thermoplastique ;
une deuxième couche (53) contient au moins un agent agrégant, l'agent agrégant étant choisi parmi une résine de cation pyrolytique, un acide organique ou un sel métallique multivalent ; et
une troisième couche (54) contient au moins un pigment, un dispersant polymère et des particules fines de résine,
**caractérisé en ce que**,
la troisième couche est séchée à une température égale ou supérieure à une température de pyrolyse de l'agent agrégant.

8. Article enregistré d'image (P) selon la revendication 7, dans lequel le contenu de l'agent agrégant est de 5 % en masse ou moins par rapport à la deuxième couche.

9. Article enregistré d'image (P) selon la revendication 7 ou 8, dans lequel une résine des fines particules de résine contenues dans la troisième couche est choisie parmi une résine de polyuréthane, une résine polyacrylique, ou une résine composite d'une résine de polyuréthane et d'une résine polyacrylique.

10. Article enregistré d'image (P) selon l'une quelconque des revendications 7 à 9, dans lequel la deuxième couche contient en outre de fines particules de résine, et une résine des fines particules de résine est choisie parmi une résine de polyuréthane, une résine polyacrylique, ou une résine composite d'une résine de polyuréthane et d'une résine polyacrylique.
